# EUROPÄISCHE PATENTSCHRIFT

(11) **EP 3 971 046 B1**
(45) Veröffentlichungstag und Bekanntmachung des Hinweises auf die Patenterteilung: **23.04.2025**
(21) Anmeldenummer: 21197134.6
(22) Anmeldetag: 16.09.2021
(51) Int. Cl.: B60T 13/26, B60T 13/68

(54) **VENTILANORDNUNG EINES ZUGFAHRZEUGS ZUR STEUERUNG EINER PNEUMATISCHEN BREMSANLAGE EINES ANHÄNGERFAHRZEUGS UND VERFAHREN ZU DEREN STEUERUNG**
VALVE ARRANGEMENT OF A TRACTION VEHICLE FOR CONTROLLING A PNEUMATIC BRAKE SYSTEM OF A TRAILER VEHICLE AND METHOD FOR CONTROLLING THE SAME
AGENCEMENT DE SOUPAPE D'UN VÉHICULE TRACTEUR DESTINÉ À LA COMMANDE D'UNE INSTALLATION PNEUMATIQUE DE FREINAGE D'UN VÉHICULE REMORQUE ET SON PROCÉDÉ DE COMMANDE

(30) Priorität: 17.09.2020 DE 102020124225
(43) Veröffentlichungstag der Anmeldung: 23.03.2022
(73) Patentinhaber: ZF CV Systems Global GmbH, 3006 Bern (CH)
(72) Erfinder: BRÜTT, Mirko, 31832 Springe (DE); LASKAWY, Ivo, 21149 Hamburg (DE); SPREMBERG, Jan, 30974 Wennigsen (DE); VOLKER, Lars, 30926 Seelze (DE)
(74) Vertreter: ZF Friedrichshafen AG

(56) Entgegenhaltungen:
- DE-A1- 102017 126 976
- DE-A1- 102018 104 143
- DE-A1- 3 703 639

## Beschreibung

Die Erfindung betrifft eine Ventilanordnung eines Zugfahrzeugs zur Steuerung einer pneumatischen Bremsanlage eines Anhängerfahrzeugs, wobei die Ventilanordnung ein Anhängersteuerventil mit einem Vorratsdruckeingang zur Einleitung von Vorratsdruckluft sowie einen Vorratsdruckausgang zur gesteuerten Ausleitung von Vorratsdruckluft aufweist, und bei dem der Vorratsdruckausgang pneumatisch mit einem Kupplungskopf "Vorrat" des Zugfahrzeugs verbunden ist. Außerdem betrifft die Erfindung ein Verfahren zur Steuerung einer derartigen Ventilanordnung beim Ankoppeln eines Anhängerfahrzeugs an ein Zugfahrzeug.

Moderne Zugfahrzeuge, wie Lastkraftwagen und Sattelzugmaschinen, die vorwiegend für Fahrten auf befestigten Straßen und Autobahnen vorgesehen sind, weisen üblicherweise eine druckluftbetriebene Bremsanlage mit elektronischer Steuerung auf. Dagegen sind moderne Zugfahrzeuge, wie Traktoren, die für den Einsatz abseits von befestigten Straßen und Wegen ausgelegt sind, häufig mit hydraulischen Bremsanlagen mit elektronischer Steuerung ausgerüstet. Die Bremsanlagen beider Fahrzeuggattungen weisen meistens eine Ventilanordnung zur Steuerung einer pneumatischen Bremsanlage eines ankoppelbaren Anhängerfahrzeugs auf, welche ein Anhängersteuerventil mit elektrisch gesteuerten Einlassventilen und Auslassventilen sowie ein pneumatisch gesteuertes Relaisventil und ein Backupventil mit einem elektrisch gesteuerten Redundanzventil sowie einem bremsdruckgesteuerten Relaisventil aufweist.

Im Normalbetrieb wird in dem Anhängersteuerventil ein mittels eines Kompressors erzeugter und in einer Druckluftversorgungsanlage aufbereiteter pneumatischer Vorratsdruck über ein Abrissventil an einen Kupplungskopf "Vorrat" (rot) des Zugfahrzeugs geleitet. Außerdem wird in Abhängigkeit eines von einem elektronischen Bremswertsensor erfassten elektronischen Bremswertsignals mittels eines über Einlassventile und Auslassventile eingestellten Steuerdrucks in dem Relaisventil des Anhängersteuerventils ein entsprechender Bremssteuerdruck eingestellt, welcher über ein Wechselventil an den Kupplungskopf "Bremse" (gelb) des Zugfahrzeugs geführt wird.

Bei einem Ausfall der elektronischen Steuerung oder einem nicht vorhandenem elektronischen Bremswertsignal wird durch die Abschaltung der Einlassventile und Auslassventile der Steuereingang des zugeordneten Relaisventils entlüftet und damit das Anhängersteuerventil deaktiviert. Zudem wird dann durch die Umschaltung eines Redundanzventils von einer Sperrstellung in eine Offenstellung der Vorratsdruckeingang oder der Bremssteuerausgang des dortigen Relaisventils freigeschaltet und dadurch das Backupventil aktiviert. In dem Relaisventil des Backupventils wird in Abhängigkeit des an einer Bremsleitung des Zugfahrzeugs gemessenen Bremsdruckes ein Bremssteuerdruck für das Anhängerfahrzeug eingestellt und über das Wechselventil an den Kupplungskopf "Bremse" (gelb) geführt. Hierdurch ist die Funktion der Betriebsbremsen des Anhängerfahrzeugs auch bei einem Ausfall der elektronischen Steuerung oder bei einem Wegfall des elektronischen Bremswertsignals gewährleistet.

In der DE 10 2014 002 614 A1 sind mehrere Ausführungsformen einer derartigen Ventilanordnung eines hydraulisch gebremsten Zugfahrzeugs zur Steuerung des Bremsdruckes eines pneumatisch gebremsten Anhängerfahrzeugs beschrieben, welche für die Einsteuerung des an den Kupplungskopf "Bremse" weitergeleiteten Bremssteuerdruckes jeweils ein elektronisch gesteuertes Anhängersteuerventil und ein hydraulisch gesteuertes Backupventil aufweist. Das Anhängersteuerventil und das Backupventil sind hier jeweils als separate Ventileinheiten ausgebildet, welche über pneumatische Leitungen miteinander sowie über elektrische Steuerleitungen mit einem elektronischen Steuergerät verbunden sind.

Für die Nutzung der Radbremsen des Anhängerfahrzeugs in einer Parkbremsfunktion kann die Ventilanordnung eines Zugfahrzeugs ein elektronisch steuerbares Parkbremsmodul aufweisen, welches mindestens ein als Parkbremsventil wirksames Magnetschaltventil aufweist, über welches ein invertierter Steuereingang des Anhängersteuerventils beziehungsweise des dortigen Relaisventils wechselweise mit dem Vorratsdruck beaufschlagbar oder entlüftbar ist. Das Parkbremsmodul ist dabei üblicherweise nicht als baulich gesonderte Einheit ausgebildet, sondern in das Gesamtsystem der Ventilanordnung integriert ausgebildet.

Eine solche Bremsanlage eines Zugfahrzeugs ist zum Beispiel aus der DE 10 2018 104 143 A1 bekannt. In der dortigen Ventilanordnung zur Steuerung der pneumatischen Bremsanlage eines Anhängerfahrzeugs ist ein Feststellbremsmodul mit zwei parallelgeschalteten Parkbremsventilen und einem ausgangsseitig angeordneten Wechselventil vorgesehen. Die Parkbremsventile sind als 3/2-Wege-Magnetschaltventile ausgeführt und über separate Schalteinheiten eines elektronischen Steuergeräts unabhängig voneinander schaltbar. Über das dortige Wechselventil sind die Ausgänge der Parkbremsventile mit dem invertierten Steuereingang am Relaisventil des Anhängersteuerventils verbunden. Im unbetätigten, also unbestromten Zustand beider Parkbremsventile ist der invertierten Steuereingang des Relaisventils drucklos geschaltet, welches zum Einlegen der Radbremsen des Anhängerfahrzeugs in der Parkbremsfunktion führt. Bei einer Umschaltung eines der beiden Parkbremsventile wird der invertierte Steuereingang des Anhängersteuerventils aus einer druckführenden Versorgungsleitung mit dem Vorratsdruck beaufschlagt, welches dann zum Lösen der Radbremsen des Anhängerfahrzeugs führt.

Um ein Anhängerfahrzeug, wie einen Deichselanhänger oder einen Sattelauflieger, an ein Zugfahrzeug, wie einen Lastkraftwagen, einen Ackerschlepper oder eine Sattelzugmaschine anzukoppeln, ist nach dem mechanischen Ankoppeln des Anhängerfahrzeugs mit der Deichselöse oder dem Sattelzapfen an die Anhänger- oder Sattelkupplung des Zugfahrzeugs und dem Einlegen der Parkbremse des Zugfahrzeugs das Anschließen der Kupplungsköpfe der Vorratsleitung und der Bremssteuerleitung des Anhängerfahrzeugs an die zugeordneten Kupplungsköpfe des Zugfahrzeugs erforderlich. Während die Kupplungsköpfe eines Anhängerfahrzeugs üblicherweise keine Absperrventile aufweisen, sind die Kupplungsköpfe eines Zugfahrzeugs jeweils mit einem federbelasteten Absperrventil versehen, welches jeweils über ein axial nach innen verschiebbares Druckstück in seine Öffnungsstellung bringbar ist. Da bei eingelegter Parkbremse sowohl die zu dem Kupplungskopf "Vorrat" führende Vorratsleitung als auch die zu dem Kupplungskopf "Bremse" führende Bremssteuerleitung des Zugfahrzeugs unter pneumatischem Druck steht, wird durch die dortigen Absperrventile in den Kupplungsköpfen ein Entweichen der Druckluft verhindert.

Als Ausführungsbeispiel ist in der DE 19 38 201 C3 ein für eine pneumatische Ventilanordnung eines Zugfahrzeugs vorgesehener Kupplungskopf mit einem als Kippventil ausgeführten Absperrventil beschrieben. Zwei Ausführungen eines für eine pneumatische Bremsanlage eines Anhängerfahrzeugs vorgesehenen Kupplungskopfes ohne Absperrventil sind beispielsweise aus der DE 199 31 162 B4 bekannt.

Beim Anschließen der Kupplungsköpfe werden jeweils ein anhängerseitiger Kupplungskopf und ein zugfahrzeugseitiger Kupplungskopf mit ihren Anschlussbohrungen koaxial aneinandergelegt, mit axialem Druck unter Lösen des Absperrventils in dem zugfahrzeugseitigen Kupplungskopf gegeneinandergedrückt, sowie im Gegenuhrzeigersinn um etwa 45° gegeneinander verdreht und damit formschlüssig verriegelt. Während dieses Anschlussvorgangs entweicht zwangsläufig Druckluft aus dem zugfahrzeugseitigen Kupplungskopf, welches unangenehme Geräusche verursacht sowie aufgrund der wirksamen Druckluftkraft eine erhöhte Anpresskraft der Kupplungsköpfe erfordert und den Anschlussvorgang erschwert.

Aus der DE 10 2017 126976 A1 ist ein eine Bremseinrichtung für Kraftfahrzeuge sowie ein Verfahren zu deren Betrieb bekannt. Die Bremseinrichtung umfasst eine erste Anhängerkupplungseinheit sowie eine zweite Anhängerkupplungseinheit. Die erste Anhängerkupplungseinheit ist über eine Anhänger-Versorgungsleitung mit dem Ausgang eines Schaltventils verbunden. Dieses Schaltventil verfügt über einen ersten Schaltzustand, in dem die Anhängerversorgungsleitung über einen Entlüftungsausgang des Schaltventils entlüftet werden kann, und einen zweiten Schaltzustand, in dem über die Anhängerversorgungsleitung an der ersten Anhängerkupplungseinheit Druckluft zur Belüftung einer Parkbremse bzw. Federspeicher-Feststellbremse eines Anhängers bereitgestellt werden kann.

Aus der DE 37 03 639 A1 ist eine elektro-pneumatische Bremsanlage für Zugfahrzeuge bekannt. Dabei wird ein Notentlüftungsventil beschrieben, dass sich aus einem pneumatisch gesteuerten 3/2-Wegeventil mit Federrückstellung und einem 3/2-Wegemagnetventil mit Federrückstellung zusammensetzt.

Der vorliegenden Erfindung liegt daher die Aufgabe zugrunde, eine Ventilanordnung eines Zugfahrzeugs der eingangs genannten Art vorzustellen, mit der beim Ankoppeln eines Anhängerfahrzeugs an ein Zugfahrzeug das Anschließen zumindest des Kupplungskopfes der Vorratsleitung sowie vorzugsweise auch das Anschließen der Bremssteuerleitung des Anhängerfahrzeuges komfortabler sowie einfacher als bisher durchgeführt werden kann. Außerdem soll ein Verfahren zur Steuerung einer derartigen Ventilanordnung beim Ankoppeln eines Anhängerfahrzeugs an ein Zugfahrzeug beschrieben werden, mit dem das Anschließen zumindest des Kupplungskopfes der Vorratsleitung sowie vorzugsweise auch das Anschließen der Bremssteuerleitung des Anhängerfahrzeuges automatisiert komfortabler gestaltet und vereinfacht durchführbar ist.

Die Lösung der vorrichtungsbezogenen Aufgabe ist mit einer Ventilanordnung gelöst, welche die Merkmale des Anspruchs 1 aufweist. Die verfahrensbezogene Aufgabe ist durch ein Verfahren mit den Merkmalen des unabhängigen Verfahrensanspruchs gelöst. Vorteilhafte Ausgestaltungen und Weiterbildungen der Ventilanordnung sowie des diesbezüglichen Steuerungsverfahrens sind in den jeweils zugeordneten abhängigen Ansprüchen definiert.

Offenbart wird eine nicht unter den Schutzumfang des Anspruchs fallende Ventilanordnung eines Zugfahrzeugs zur Steuerung einer pneumatischen Bremsanlage eines Anhängerfahrzeugs, wobei die Ventilanordnung ein Anhängersteuerventil mit einem Vorratsdruckeingang zur Einleitung von Vorratsdruckluft sowie einen Vorratsdruckausgang zur gesteuerten Ausleitung von Vorratsdruckluft aufweist, und bei dem der Vorratsdruckausgang pneumatisch mit einem Kupplungskopf "Vorrat" des Zugfahrzeugs verbunden ist. Das Anhängersteuerventil kann mechanisch oder elektronisch steuerbar ausgebildet sein.

Bei dieser Ventilanordnung kann vorgesehen sein, dass in einer pneumatisch vor dem Kupplungskopf "Vorrat" angeordneten Vorratsdruckleitung ein Absperr- und Entlüftungsventil angeordnet ist, dass mittels dieses Absperr- und Entlüftungsventils vor dem Anschließen eines zugeordneten Kupplungskopfes des Anhängerfahrzeugs an den Kupplungskopf "Vorrat" des Zugfahrzeugs die Zuleitung von Vorratsdruckluft zu diesem Kupplungskopf "Vorrat" absperrbar sowie dieser Kupplungskopf "Vorrat" entlüftbar ist, und dass mittels des Absperr- und Entlüftungsventils nach dem Anschließen des zugeordneten Kupplungskopfes des Anhängerfahrzeugs an den Kupplungskopf "Vorrat" des Zugfahrzeugs dieser Kupplungskopf "Vorrat" erneut mit Vorratsdruckluft beaufschlagbar ist.

Das Absperr- und Entlüftungsventil kann in das Anhängersteuerventil baulich integriert und in einer dortigen Vorratsdruckleitung angeordnet sein. Gemäß einer anderen, gleichwirkenden Anordnung kann vorgesehen sein, dass das Absperr- und Entlüftungsventil hinter dem Vorratsdruckausgang des Anhängersteuerventils und vor dem Kupplungskopf "Vorrat" des Zugfahrzeugs angeordnet ist. Ebenso ist es gleichwirkend möglich, dass das Absperr- und Entlüftungsventil vor dem Vorratsdruckeingang des Anhängersteuerventils in einer bezüglich des Anhängersteuerventils externen, eingangsseitigen Vorratsdruckleitung angeordnet ist.

Mit der Anordnung eines Absperr- und Entlüftungsventils in einer Vorratsdruckleitung vor dem Kupplungskopf "Vorrat" des Zugfahrzeugs, vorzugsweise pneumatisch zwischen dem Vorratsdruckausgang des Anhängersteuerventils und dem Kupplungskopf "Vorrat" des Zugfahrzeugs, kann dieser Kupplungskopf des Zugfahrzeugs vor dem Anschließen des zugeordneten Kupplungskopfes "Vorrat" des Anhängerfahrzeugs entlüftet und damit drucklos geschaltet werden. In dessen Folge kann der Kupplungskopf "Vorrat" des Anhängerfahrzeugs ohne das Entweichen von Druckluft und damit ohne störende Geräusche sowie ohne Belastung durch Druckluftkräfte an den Kupplungskopf "Vorrat" des Zugfahrzeugs angeschlossen werden. Das Anschließen des Kupplungskopfes "Vorrat" des Anhängerfahrzeugs an den Kupplungskopf "Vorrat" des Zugfahrzeugs ist damit im Vergleich zur bisherigen Praxis deutlich vereinfacht sowie komfortabler gestaltet. Zudem wird ein erhöhter Druckluftverlust vermieden, welcher bisher bei einem ungeschickt durchgeführten Koppelvorgang erfolgen konnte.

In der Ausgestaltung der durch die Erfindung definierten Konstruktion wird eine Ventilanordnung eines Zugfahrzeugs zur Steuerung einer pneumatischen Bremsanlage eines Anhängerfahrzeugs beansprucht, welche ein Anhängersteuerventil mit einem Vorratsdruckeingang zur Einleitung von Vorratsdruckluft sowie einen Vorratsdruckausgang zur gesteuerten Ausleitung von Vorratsdruckluft aufweist, wobei der Vorratsdruckausgang pneumatisch mit einem Kupplungskopf "Vorrat" des Zugfahrzeugs verbunden ist, und bei dem mittels des Anhängersteuerventils ein Bremssteuerdruck einstellbar sowie dieser über einen Bremssteuerausgang des Anhängersteuerventils an einen Kupplungskopf "Bremse" des Zugfahrzeugs leitbar ist, sowie mit einem elektronisch steuerbaren Parkbremsmodul, mittels dem ein invertierter Steuereingang des Anhängersteuerventils zur Betätigung der Radbremsen des Anhängerfahrzeugs in einer Parkbremsfunktion entlüftbar ist. Dieses Parkbremsmodul weist mindestens ein als Parkbremsventil wirksames Magnetschaltventil auf. Das eine Parkbremsventil oder die Parkbremsventile können unmittelbar in die Ventilanordnung eines Zugfahrzeugs intergiert sein.

Gemäß der Erfindung ist diese Ventilanordnung dadurch gekennzeichnet, dass in einer Bremssteuerleitung zwischen dem Bremssteuerausgang und dem Kupplungskopf "Bremse" und/oder in einer Vorratsdruckleitung zwischen dem Vorratsdruckausgang und dem Kupplungskopf "Vorrat" jeweils ein Absperr- und Entlüftungsventil angeordnet ist, mittels dem bei aktivierter Parkbremse vor dem Anschließen der Kupplungsköpfe des Anhängerfahrzeugs an die Kupplungsköpfe des Zugfahrzeugs der jeweilige Ausgang des Anhängersteuerventils absperrbar sowie der zugeordnete Kupplungskopf des Zugfahrzeugs entlüftbar ist, und mittels dem nach dem Anschließen der Kupplungsköpfe des Anhängerfahrzeugs an die Kupplungsköpfe des Zugfahrzeugs der jeweilige Ausgang des Anhängersteuerventils wieder pneumatisch mit dem zugeordneten Kupplungskopf des Zugfahrzeugs verbindbar ist.

Mit der Anordnung eines Absperr- und Entlüftungsventils in der Bremssteuerleitung zwischen dem Bremssteuerausgang und dem Kupplungskopf "Bremse" und/oder in der Vorratsdruckleitung zwischen dem Vorratsdruckausgang und dem Kupplungskopf "Vorrat" können die Kupplungsköpfe des Zugfahrzeugs bei eingelegter Parkbremse vor dem Anschließen der Kupplungsköpfe des Anhängerfahrzeugs entlüftet und damit drucklos geschaltet werden. In dessen Folge können die Kupplungsköpfe des Anhängerfahrzeugs ohne das Entweichen von Druckluft und damit ohne störende Geräusche sowie ohne Belastung durch Druckluftkräfte an die Kupplungsköpfe des Zugfahrzeugs angeschlossen werden. Das Anschließen der Kupplungsköpfe des Anhängerfahrzeugs an die Kupplungsköpfe des Zugfahrzeugs ist damit im Vergleich mit der bisherigen Praxis deutlich vereinfacht und komfortabler gestaltet. Zudem wird ebenfalls ein erhöhter Druckluftverlust vermieden, welcher bisher bei einem ungeschickt durchgeführten Koppelvorgang erfolgen konnte.

Gemäß einer ersten Ausführungsform der gerade beschriebenen Ventilanordnung ist vorgesehen, dass sowohl in der Vorratsdruckleitung zwischen dem Vorratsdruckausgang und dem Kupplungskopf "Vorrat" als auch in der Bremssteuerleitung zwischen dem Bremssteuerausgang und dem Kupplungskopf "Bremse" jeweils ein manuell betätigbares Absperr- und Entlüftungsventil angeordnet ist, und dass diese Absperr- und Entlüftungsventile als 3/2-Wege-Schaltventile mit einem an den jeweiligen Ausgang des Anhängersteuerventils angeschlossenen Eingangsanschluss, einem an den jeweiligen Kupplungskopf angeschlossenen Ausgangsanschluss und einem Entlüftungsausgang ausgebildet sind, bei denen im unbetätigten Zustand der Eingangsanschluss mit dem Ausgangsanschluss verbunden und der Entlüftungsausgang abgesperrt ist, und bei denen im betätigten Zustand der Eingangsanschluss abgesperrt sowie der Ausgangsanschluss mit dem Entlüftungsausgang verbunden ist.

Diese Absperr- und Entlüftungsventile sind jeweils bevorzugt mittels eines Drucktasters manuell schaltbar und in der betätigten Schaltstellung verrastbar. Die Verrastung der Absperr- und Entlüftungsventile kann entweder durch eine nochmalige Betätigung des jeweiligen Drucktasters oder nach einer vorbestimmten Haltezeit unter der Wirkung jeweils einer ventilinternen Rückstellfeder selbsttätig lösbar ausgebildet sein.

Gemäß einer zweiten Ausführungsform der Ventilanordnung ist vorgesehen, dass nur in der Vorratsdruckleitung zwischen dem Vorratsdruckausgang und dem Kupplungskopf "Vorrat" ein elektrisch betätigbares Absperr- und Entlüftungsventil angeordnet ist, dass dieses Absperr- und Entlüftungsventil als ein 3/2-Wege-Magnetschaltventil mit einem an den Vorratsdruckausgang angeschlossenen Eingangsanschluss, einem an den Kupplungskopf "Vorrat" angeschlossenen Ausgangsanschluss und einem Entlüftungsausgang ausgebildet ist, dass bei dem Absperr- und Entlüftungsventil im unbestromten Zustand der Eingangsanschluss mit dem Ausgangsanschluss verbunden sowie der Entlüftungsausgang abgesperrt ist, dass bei dem Absperr- und Entlüftungsventil im bestromten Zustand der Eingangsanschluss abgesperrt und der Ausgangsanschluss mit dem Entlüftungsausgang verbunden ist, und dass die Belüftung und Entlüftung des Kupplungskopfes "Bremse" über eine diesbezügliche Ansteuerung des
Anhängersteuerventils über das erwähnte Parkbremsmodul erfolgen kann.

Diese Ausführungsform der Ventilanordnung kommt bevorzugt dann zur Anwendung, wenn das Anhängersteuerventil, das Parkbremsmodul sowie das Absperr- und Entlüftungsventil mit demselben elektronischen Steuergerät verbunden sind und somit unmittelbar von diesem angesteuert werden können.

Gemäß einer dritten Ausführungsform der Ventilanordnung ist vorgesehen, dass sowohl in der Vorratsdruckleitung zwischen dem Vorratsdruckausgang und dem Kupplungskopf "Vorrat" als auch in der Bremssteuerleitung zwischen dem Bremssteuerausgang und dem Kupplungskopf "Bremse" jeweils ein elektrisch betätigbares Absperr- und Entlüftungsventil angeordnet ist, dass diese Absperr- und Entlüftungsventile als 3/2-Wege-Magnetschaltventile mit einem an den jeweiligen Ausgang des Anhängersteuerventils angeschlossenen Eingangsanschluss, einem an den jeweiligen Kupplungskopf angeschlossenen Ausgangsanschluss und einem Entlüftungsausgang ausgebildet sind, dass bei diesen Absperr- und Entlüftungsventilen im unbestromten Zustand der Eingangsanschluss mit dem Ausgangsanschluss verbunden sowie der Entlüftungsausgang abgesperrt ist, und dass bei diesen Absperr- und Entlüftungsventilen im bestromten Zustand der Eingangsanschluss abgesperrt sowie der Ausgangsanschluss mit dem Entlüftungsausgang verbunden ist.

Diese Ausführungsform der Ventilanordnung kommt bevorzugt dann zur Anwendung, wenn das Parkbremsmodul mit einem anderen, zweiten elektronischen Steuergerät verbunden ist als das Anhängersteuerventil sowie das Absperr- und Entlüftungsventil, wodurch das Parkbremsmodul nur indirekt und verzögerungsbehaftet von dem elektronischen Steuergerät für das Anhängersteuerventil und für das Absperr- und Entlüftungsventils ansteuerbar ist.

Gemäß einer vierten Ausführungsform der Ventilanordnung ist vorgesehen, dass in der Vorratsdruckleitung zwischen dem Vorratsdruckausgang und dem Kupplungskopf "Vorrat" ein elektrisch betätigbares Absperr- und Entlüftungsventil sowie in der Bremssteuerleitung zwischen dem Bremssteuerausgang und dem Kupplungskopf "Bremse" ein pneumatisch druckgesteuertes Absperr- und Entlüftungsventil angeordnet ist, dass das elektrisch betätigbare Absperr- und Entlüftungsventil in der Vorratsdruckleitung als ein 3/2-Wege-Magnetschaltventil mit einem an den Vorratsdruckausgang angeschlossenen Eingangsanschluss, einem an den betreffenden Kupplungskopf angeschlossenen Ausgangsanschluss und einem Entlüftungsausgang ausgebildet ist, dass bei dem elektrisch betätigbaren Absperr- und Entlüftungsventil im unbestromten Zustand der Eingangsanschluss mit dem Ausgangsanschluss verbunden sowie der Entlüftungsausgang abgesperrt ist, dass bei dem elektrisch betätigbaren Absperr- und Entlüftungsventil im bestromten Zustand der Eingangsanschluss abgesperrt und der Ausgangsanschluss mit dem Entlüftungsausgang verbunden ist, dass das pneumatisch druckgesteuerte Absperr- und Entlüftungsventil in der Bremssteuerleitung als ein 3/2-Wege-Schaltventil mit einem an die Vorratsdruckleitung zwischen dem dortigen Absperr- und Entlüftungsventil und dem Kupplungskopf "Vorrat" angeschlossenen Steuereingang, einem an den Bremssteuerausgang angeschlossenen Eingangsanschluss, einem an den Kupplungskopf "Bremse" angeschlossenen Ausgangsanschluss und einem Entlüftungsausgang ausgebildet ist, und dass bei diesem pneumatisch druckgesteuerten Absperr- und Entlüftungsventil bei drucklosem Steuereingang der Eingangsanschluss abgesperrt sowie der Ausgangsanschluss mit dem Entlüftungsausgang verbunden ist, sowie bei druckführendem Steuereingang der Eingangsanschluss mit dem Ausgangsanschluss verbunden sowie der Entlüftungsausgang abgesperrt ist.

Auch diese Ausführungsform der Ventilanordnung kommt bevorzugt dann zur Anwendung, wenn das Parkbremsmodul mit einem anderen, zweiten elektronischen Steuergerät verbunden ist als das Anhängersteuerventil und das Absperr- und Entlüftungsventil.

Um das Absperren der Ausgänge des Anhängersteuerventils und das Entlüften der Kupplungsköpfe automatisiert zu beenden, kann anhand eines über das betreffende Absperr- und Entlüftungsventil oder über eine entsprechende Ansteuerung des Parkbremsmoduls ein Druckimpuls in die zu dem Kupplungskopf "Vorrat" führende Vorratsdruckleitung oder in die zu dem Kupplungskopf "Bremse" führende Bremssteuerleitung eingesteuert werden. Sofern sich dabei aufgrund eines geringen Leitungsvolumens ein hoher Druckgradient einstellt, ist zumindest der betreffende Kupplungskopf des Anhängerfahrzeugs noch nicht angeschlossen, sodass die Ausgänge des Anhängersteuerventils noch abgesperrt und die Kupplungsköpfe noch entlüftet gehalten werden sollten. Wenn sich dabei dagegen aufgrund eines großen Leitungsvolumens ein niedriger Druckgradient einstellt, ist zumindest der betreffende Kupplungskopf des Anhängerfahrzeugs schon angeschlossen, sodass das Absperren der Ausgänge des Anhängersteuerventils und das Entlüften der Kupplungsköpfe beendet werden kann.

Wenn der Druckimpuls in die zu dem Kupplungskopf "Bremse" führende Bremssteuerleitung eingesteuert werden soll, ist zur Ermöglichung dieser Steuerungsfunktion bei der dritten Ausführungsform der Ventilanordnung vorgesehen, dass zur Messung des am Kupplungskopf "Bremse" anliegenden Bremssteuerdruckes ein pneumatischer Drucksensor zwischen dem Absperr- und Entlüftungsventil und dem Kupplungskopf "Bremse" an die Bremssteuerleitung angeschlossen ist. Bei der zweiten Ausführungsform der Ventilanordnung kann der am Kupplungskopf "Bremse" anliegende Bremssteuerdruck über einen üblicherweise innerhalb des Anhängersteuerventils angeordneten Drucksensor, welcher an eine zu dem Bremssteuerausgang führende Bremssteuerleitung angeschlossen ist, gemessen werden.

Wenn der Druckimpuls in die zu dem Kupplungskopf "Vorrat" führende Vorratsdruckleitung eingesteuert werden soll, ist zur Ermöglichung dieser Steuerungsfunktion bei der zweiten bis vierten Ausführungsform der Ventilanordnung vorgesehen, dass zur Messung des am Kupplungskopf "Vorrat" anliegenden Bremssteuerdruckes ein pneumatischer Drucksensor zwischen dem Absperr- und Entlüftungsventil sowie dem Kupplungskopf "Vorrat" an die Vorratsdruckleitung angeschlossen ist.

Im Gegensatz zur Einsteuerung eines Druckimpulses in die Bremssteuerleitung birgt die Einsteuerung eines Druckimpulses in die Vorratsleitung jedoch die Gefahr, dass die Radbremsen des Anhängerfahrzeugs dadurch kurzzeitig gelöst werden, wodurch sich das Fahrzeuggespann geringfügig in Bewegung setzen kann, wenn die Bremswirkung der Parkbremsen des Zugfahrzeugs für das Halten des gesamten Fahrzeuggespanns zu gering ist.

Schließlich kann vorgesehen sein, dass durch eine manuelle Betätigung eines mit dem elektronischen Steuergerät signaltechnisch verbunden elektrischen Schalters mittels des Steuergeräts eine Bestromung zumindest eines der beiden Absperr- und Entlüftungsventile ausgelöst wird, wodurch eine Entlüftung des jeweils strömungstechnisch dahinter angeordneten Kupplungskopfes "Vorrat" und/oder des Kupplungskopfes "Bremse" erfolgt. In dessen Folge können die Vorratsleitung und die Bremssteuerleitung eines Anhängerfahrzeugs wie beschrieben bequem sowie geräuschlos an die abgesperrten und entlüfteten Kupplungsköpfe des Zugfahrzeugs angeschlossen werden.

Zur Lösung der verfahrensbezogenen Aufgabe sieht die Erfindung ein Steuerungsverfahren vor, welches die Merkmale des unabhängigen Verfahrensanspruchs hat.

Offenbart wird ein nicht unter den Schutzumfang des Anspruchs fallendes Verfahren zur Steuerung einer pneumatischen Bremsanlage eines Anhängerfahrzeugs mittels einer Ventilanordnung eines Zugfahrzeugs. Diese Ventilanordnung weist ein mechanisch oder elektronisch steuerbares Anhängersteuerventil auf, mittels dem in die Ventilanordnung über einen Vorratsdruckeingang eingeleitete Vorratsdruckluft über einen Vorratsdruckausgang zu einem Kupplungskopf "Vorrat" des Zugfahrzeugs führbar ist.

Dieses Verfahren ist dadurch gekennzeichnet, dass vor dem Anschließen eines zugeordneten Kupplungskopfes des Anhängerfahrzeugs an den Kupplungskopf "Vorrat" des Zugfahrzeugs die Zuleitung von Vorratsdruckluft zu dem Kupplungskopf "Vorrat" des Zugfahrzeugs abgesperrt sowie dieser Kupplungskopf "Vorrat" des Zugfahrzeugs entlüftet wird. Außerdem ist verfahrensgemäß vorgesehen, dass nach dem Anschließen eines zugeordneten Kupplungskopfes des Anhängerfahrzeugs an den Kupplungskopf "Vorrat" des Zugfahrzeugs die Zuleitung von Vorratsdruckluft zu diesem Kupplungskopf "Vorrat" des Zugfahrzeugs freigegeben und dieser erneut mit Vorratsdruckluft beaufschlagt wird.

Dadurch, dass vor der Verbindung der Kupplungsköpfe "Vorrat" des Zugfahrzeugs und des Anhängerfahrzeugs der Kupplungskopf "Vorrat" des Zugfahrzeugs abgesperrt und entlüftet wird, kann der Kupplungskopf "Vorrat" des Anhängerfahrzeugs ohne das Entweichen von Druckluft und damit ohne störende Geräusche sowie Druckluftkräfte an den Kupplungskopf "Vorrat" des Zugfahrzeugs angeschlossen werden. Das Anschließen des Kupplungskopfes des Anhängerfahrzeugs an den Kupplungskopf des Zugfahrzeugs ist damit gegenüber der bisherigen Praxis deutlich vereinfacht und komfortabler durchführbar.

Die Erfindung betrifft ein Verfahren zur Steuerung der bereits beschriebenen Ventilanordnung.

Zur komfortablen pneumatischen Verbindung von Zugfahrzeug und Anhängerfahrzeug ist vorgesehen, dass beim Einlegen der Parkbremse des Zugfahrzeugs entsprechend einem Betätigungszustand PB = 1 der Kupplungskopf "Vorrat" des Zugfahrzeugs entlüftet wird und der Kupplungskopf "Bremse" des Zugfahrzeugs entlüftet gehalten wird.

Dadurch, dass beim Einlegen der Parkbremse des Zugfahrzeugs der Kupplungskopf "Vorrat" des Zugfahrzeugs entlüftet und der Kupplungskopf "Bremse" des Zugfahrzeugs entlüftet gehalten wird, können die zugeordneten Kupplungsköpfe des Anhängerfahrzeugs ohne das Entweichen von Druckluft und damit ohne störende Geräusche sowie Druckluftkräfte an die genannten Kupplungsköpfe des Zugfahrzeugs angeschlossen werden. Das Anschließen der Kupplungsköpfe des Anhängerfahrzeugs an die Kupplungsköpfe des Zugfahrzeugs ist damit gegenüber der bisherigen Praxis deutlich vereinfacht und komfortabler durchführbar.

Gemäß einer ersten Verfahrensvariante ist vorgesehen, dass der Kupplungskopf "Vorrat" und der Kupplungskopf "Bremse" des Zugfahrzeugs solange entlüftet gehalten werden, bis die Parkbremse des Zugfahrzeugs wieder gelöst wird (Betätigungszustand PB = 0).

Dies kann jedoch mit dem Nachteil verbunden sein, dass die Speicherbehälter des Anhängerfahrzeugs beim Losfahren des Fahrzeuggespanns unzureichend gefüllt sind.

Gemäß einer zweiten Verfahrensvariante, mit welcher der gerade genannte Nachteil vermieden wird, ist daher vorgesehen, dass der Kupplungskopf "Vorrat" und der Kupplungskopf "Bremse" des Zugfahrzeugs über einen vorbestimmten Zeitraum entlüftet gehalten werden, welcher derart bemessen ist, dass ein Fahrer innerhalb dieses Zeitraums bequem in der Lage ist, das Fahrerhaus des Zugfahrzeugs zu verlassen, den Kupplungsbereich aufzusuchen und die Kupplungsköpfe des Anhängerfahrzeugs an die Kupplungsköpfe des Zugfahrzeugs anzuschließen.

Gemäß einer dritten Verfahrensvariante, mit welcher der genannte Nachteil ebenfalls vermieden wird, ist vorgesehen, dass während der Entlüftung von Kupplungskopf "Vorrat" und Kupplungskopf "Bremse" des Zugfahrzeugs in einem vorgegebenen Zeittakt Druckimpulse in die zu dem Kupplungskopf "Vorrat" führende Vorratsdruckleitung eingesteuert werden, dass der Druckgradient in der Vorratsdruckleitung sensorisch gemessen wird, dass die beiden Kupplungsköpfe des Zugfahrzeugs entlüftet gehalten werden, sofern ein hoher Druckgradient vorliegt, und dass die Entlüftung der beiden Kupplungsköpfe beendet wird, sofern ein niedriger Druckgradient vorliegt

Dabei wird davon ausgegangen, dass das Anschließen der Vorratsdruckleitung des Anhängerfahrzeugs an den Kupplungskopf "Vorrat" des Zugfahrzeugs wie üblich unmittelbar nach dem Anschließen der Bremssteuerleitung an den Kupplungskopf "Bremse" erfolgt. Ein hoher Druckgradient liegt dann vor, wenn die Vorratsleitung des Anhängerfahrzeugs noch nicht an den Kupplungskopf "Vorrat" des Zugfahrzeugs angeschlossen und das Volumen der betreffenden Vorratsdruckleitung somit gering ist. Ein niedriger Druckgradient liegt dagegen dann vor, wenn die Vorratsleitung des Anhängerfahrzeugs bereits an den Kupplungskopf "Vorrat" des Zugfahrzeugs angeschlossen und das Volumen der betreffenden Vorratsdruckleitung somit groß ist. Da die Radbremsen des Anhängerfahrzeugs aufgrund des entlüfteten Kupplungskopfes "Bremse" durch die impulsförmige Belüftung des Kupplungskopfes "Vorrat" kurzzeitig gelöst werden können, kann es jedoch zu einem kurzzeitigen Anrollen des Fahrzeuggespanns kommen, wenn die Parkbremsen des Zugfahrzeugs nicht in der Lage sind dies zu verhindern.

Zur Vermeidung dieses letztgenannten Nachteils ist gemäß einer vierten Verfahrensvariante vorgesehen, dass während der Entlüftung von Kupplungskopf "Vorrat" und Kupplungskopf "Bremse" des Zugfahrzeugs in einem vorgegebenen Zeittakt Druckimpulse in die zu dem Kupplungskopf "Bremse" des Zugfahrzeugs führende Bremssteuerleitung eingesteuert werden, dass der Druckgradient in der Bremssteuerleitung sensorisch gemessen wird, dass die beiden Kupplungsköpfe des Zugfahrzeugs entlüftet gehalten werden, sofern ein hoher Druckgradient vorliegt, und dass die Entlüftung der beiden Kupplungsköpfe des Zugfahrzeugs beendet wird, sofern ein niedriger Druckgradient vorliegt.

Dabei wird davon ausgegangen, dass das Anschließen der Bremssteuerleitung des Anhängerfahrzeugs an den Kupplungskopf "Bremse" des Zugfahrzeugs wie üblich unmittelbar vor dem Anschließen der Vorratsdruckleitung an den Kupplungskopf "Vorrat" des Zugfahrzeugs erfolgt. Ein hoher Druckgradient liegt dann vor, wenn die Bremssteuerleitung des Anhängerfahrzeugs noch nicht an den Kupplungskopf "Bremse" des Zugfahrzeugs angeschlossen und das Volumen der betreffenden Bremssteuerleitung somit gering ist. Ein niedriger Druckgradient liegt dagegen dann vor, wenn die Bremssteuerleitung des Anhängerfahrzeugs bereits an den Kupplungskopf "Bremse" des Zugfahrzeugs angeschlossen und das Volumen der betreffenden Bremssteuerleitung somit groß ist.

Ein unterschiedliches Ansprechverhalten der Absperr- und Entlüftungsventile beziehungsweise des Parkbremsmoduls und des Anhängersteuerventils kann dazu führen, dass beim Einlegen der Parkbremse des Zugfahrzeugs der Kupplungskopf "Vorrat" des Zugfahrzeugs zunächst noch druckführend ist, wogegen der Kupplungskopf "Bremse" des Zugfahrzeugs schon entlüftet ist beziehungsweise entlüftet gehalten wird. Dadurch können die Radbremsen des Anhängerfahrzeugs kurzzeitig gelöst werden, wodurch sich das Fahrzeuggespann geringfügig in Bewegung setzen kann, wenn die Bremswirkung der Parkbremsen des Zugfahrzeugs für das Halten des gesamten Fahrzeuggespanns zu gering ist. Es ist daher vorteilhaft, dass zur Vermeidung eines Lösens der Radbremsen des Zugfahrzeugs zuerst der Kupplungskopf "Vorrat" des Zugfahrzeugs entlüftet wird und der Kupplungskopf "Bremse" des Zugfahrzeugs geringfügig, zum Beispiel um eine Sekunde, zeitversetzt dazu entlüftet wird beziehungsweise entlüftet gehalten wird.

Die Entlüftung der Kupplungsköpfe "Vorrat" und "Bremse" des Zugfahrzeugs erfolgt bevorzugt über jeweils ein Absperr- und Entlüftungsventil gemäß den beschriebenen Ausführungen der erfindungsgemäßen Ventilanordnung, welches in der Bremssteuerleitung zwischen dem Bremssteuerausgang und dem Kupplungskopf "Bremse" des Zugfahrzeugs und/oder in der Vorratsdruckleitung zwischen dem Vorratsdruckausgang und dem Kupplungskopf "Vorrat" des Zugfahrzeugs angeordnet ist, und/oder über ein Parkbremsmodul gemäß der betreffenden Ausführung der erfindungsgemäßen Ventilanordnung.

Die Entlüftung des Kupplungskopfes "Vorrat" und des Kupplungskopfes "Bremse" des Zugfahrzeugs kann auch mittelbar durch einen vorzugsweise am Heck des Zugfahrzeugs angeordneten manuell betätigbaren elektrischen Schalter ausgelöst werden, welcher mit dem elektronischen Steuergerät über eine Signalleitung verbunden ist. Durch die Signalisierung der Schalterbetätigung wird im Steuergerät eine Bestromung zumindest eines der beiden Absperr- und Entlüftungsventile und damit eine Entlüftung des jeweils zugeordneten Kupplungskopfes auslöst. In dessen Folge kann der Fahrer des Zugfahrzeugs die Vorratsleitung und die Bremssteuerleitung eines Anhängerfahrzeugs wie beschrieben bequem sowie geräuschlos an die entlüfteten sowie abgesperrten Kupplungsköpfe "Vorrat" beziehungsweise "Bremse" des Zugfahrzeugs anschließen.

Die Messung des Druckgradienten in der betreffenden Leitung erfolgt mittels eines pneumatischen Drucksensors gemäß den beschriebenen Ausführungen der erfindungsgemäßen Ventilanordnung, welcher an die Bremssteuerleitung zwischen dem dortigen Absperr- und Entlüftungsventil und dem Kupplungskopf "Bremse" des Zugfahrzeugs oder an die Vorratsdruckleitung zwischen dem dortigen Absperr- und Entlüftungsventil und dem Kupplungskopf "Vorrat" des Zugfahrzeugs angeschlossen ist, oder mittels eines innerhalb des Anhängersteuerventils an die zu dem Kupplungskopf "Bremse" des Zugfahrzeugs führende Bremssteuerleitung angeschlossenen pneumatischen Drucksensor.

Zur weiteren Verdeutlichung der Erfindung ist der Beschreibung eine Zeichnung mit mehreren Ausführungsbeispielen beigefügt. In dieser zeigt
Fig. 1a ein aus einem Zugfahrzeug und einem Anhängerfahrzeug bestehendes Fahrzeuggespann, wobei das Zugfahrzeug einen Kupplungskopf "Vorrat" und einen Kupplungskopf "Bremse" zur Druckmittelversorgung des Anhängerfahrzeugs aufweist,
Fig. 1b den zeitlichen Verlauf des am Kupplungskopf "Vorrat" anliegenden Vorratsdrucks gemäß dem Stand der Technik beim Ankoppeln des Anhängerfahrzeugs,
Fig. 1c den zeitlichen Verlauf des am Kupplungskopf "Bremse" anliegenden Bremssteuerdrucks gemäß dem Stand der Technik beim Ankoppeln des Anhängerfahrzeugs,
Fig. 1d den zeitlichen Verlauf des Schaltzustands der Parkbremse eines Zugfahrzeuges gemäß dem Stand der Technik beim Ankoppeln des Anhängerfahrzeugs,
Fig. 2a ein aus einem Zugfahrzeug und einem Anhängerfahrzeug bestehendes Fahrzeuggespann, wobei das Zugfahrzeug einen Kupplungskopf "Vorrat" und einen Kupplungskopf "Bremse" zur Druckmittelversorgung des Anhängerfahrzeugs aufweist,
Fig. 2b den zeitlichen Verlauf des am Kupplungskopf "Vorrat" anliegenden Vorratsdrucks gemäß der Erfindung beim Ankoppeln des Anhängerfahrzeugs,
Fig. 2c den zeitlichen Verlauf des am Kupplungskopf "Bremse" anliegenden Bremssteuerdrucks gemäß der Erfindung beim Ankoppeln des Anhängerfahrzeugs,
Fig. 2d den zeitlichen Verlauf des Schaltzustands der Parkbremse eines Zugfahrzeugs gemäß der Erfindung beim Ankoppeln eines Anhängerfahrzeugs,
Fig. 3a den zeitlichen Verlauf des am Kupplungskopf "Vorrat" anliegenden Vorratsdrucks gemäß einer ersten Verfahrensvariante,
Fig. 3b den zeitlichen Verlauf des am Kupplungskopf "Bremse" anliegenden Bremssteuerdrucks gemäß der ersten Verfahrensvariante,
Fig. 3c den zeitlichen Verlauf des Schaltzustands der Parkbremse eines Zugfahrzeugs gemäß der ersten Verfahrensvariante,
Fig. 4a den zeitlichen Verlauf des am Kupplungskopf "Vorrat" anliegenden Vorratsdrucks gemäß einer zweiten Verfahrensvariante,
Fig. 4b den zeitlichen Verlauf des am Kupplungskopf "Bremse" anliegenden Bremssteuerdrucks gemäß der zweiten Verfahrensvariante,
Fig. 4c den zeitlichen Verlauf des Schaltzustands der Parkbremse eines Zugfahrzeugs gemäß der zweiten Verfahrensvariante,
Fig. 5a den zeitlichen Verlauf des am Kupplungskopf "Vorrat" anliegenden Vorratsdrucks gemäß einer dritten Verfahrensvariante,
Fig. 5b den zeitlichen Verlauf des Schaltzustands eines in einer Vorratsdruckleitung angeordneten Absperr- und Entlüftungsventils gemäß der dritten Verfahrensvariante,
Fig. 5c den zeitlichen Verlauf des Schaltzustands der Parkbremse eines Zugfahrzeugs gemäß der dritten Verfahrensvariante,
Fig. 6a den zeitlichen Verlauf des am Kupplungskopf "Bremse" anliegenden Bremssteuerdrucks gemäß einer vierten Verfahrensvariante,
Fig. 6b den zeitlichen Verlauf des Schaltzustands eines in einer Bremssteuerleitung angeordneten Absperr- und Entlüftungsventils gemäß der vierten Verfahrensvariante,
Fig. 6c den zeitlichen Verlauf des Schaltzustands der Parkbremse eines Zugfahrzeugs gemäß der vierten Verfahrensvariante,
Fig. 7 eine erste Ausführungsform einer erfindungsgemäßen Ventilanordnung des Zugfahrzeugs zur Steuerung einer pneumatischen Bremsanlage eines Anhängerfahrzeugs in einer schematischen Abbildung,
Fig. 8 eine zweite Ausführungsform der erfindungsgemäßen Ventilanordnung in einer schematischen Abbildung,
Fig. 9 eine erste Variante einer dritten Ausführungsform der erfindungsgemäßen Ventilanordnung in einer schematischen Abbildung,
Fig. 10 eine zweite Variante der dritten Ausführungsform der erfindungsgemäßen Ventilanordnung in einer schematischen Abbildung,
Fig. 11 eine vierte Ausführungsform der erfindungsgemäßen Ventilanordnung in einer schematischen Abbildung,
Fig. 12 eine fünfte Ausführungsform der erfindungsgemäßen Ventilanordnung in einer schematischen Abbildung,
Fig. 13 eine sechste Ausführungsform der erfindungsgemäßen Ventilanordnung in einer schematischen Abbildung, und
Fig. 14 eine bekannte Ventilanordnung eines Zugfahrzeugs zur Steuerung einer pneumatischen Bremsanlage eines Anhängerfahrzeugs in einer schematischen Abbildung.

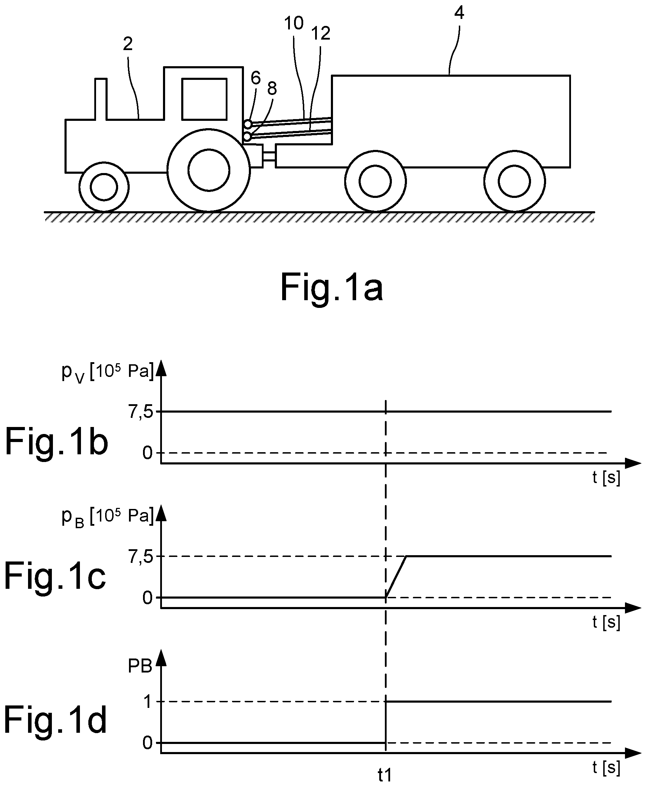

Die Figur 1a zeigt demnach ein bekanntes Fahrzeuggespann, welches aus einem Zugfahrzeug 2 und einem daran angekoppelten Anhängerfahrzeug 4 besteht. Zur Bremssteuerung der Bremsen des Anhängerfahrzeuges 4 ist dessen Zweileitungs-Druckluftbremsanlage über zwei flexible Druckluftleitungen mit dem Zugfahrzeug 2 verbunden. Die erste Druckluftleitung ist eine Vorratsdruckleitung 10, welche an einen Kupplungskopf "Vorrat" (rot) 6 des Zugfahrzeugs 2 angeschlossen ist. Die zweite Druckluftleitung ist eine Bremssteuerleitung 12, welche an den Kupplungskopf "Bremse" (gelb) 8 angeschlossen ist. Die Figur 1b bis 1d zeigen den Stand der Technik veranschaulichend der Reihe nach den zeitlichen Verlauf des Vorratsdruckes p_{V} am Kupplungskopf "Vorrat" (rot) 6, den zeitlichen Verlauf des Bremssteuerdruckes p_{B} am Kupplungskopf "Bremse" (gelb) 8 sowie den zeitlichen Verlauf des Betätigungszustands der Parkbremse PB des Zugfahrzeugs 2 gemäß der aktuellen Praxis, wobei in Fig. 1d der Wert 0 für den Betätigungszustand "Bremse ausgelegt" und der Wert 1 für "Bremse eingelegt" steht. Gleichbedeutend mit dem verwendeten Begriff "Bremse ausgelegt" kann auch der Begriff "Bremse in Offenstellung" genutzt werden, und anstelle des Begriffs "Bremse eingelegt" kann auch der Begriff "Bremse in Schließstellung" verwendet werden.

Wie Fig. 1b verdeutlicht, liegt gemäß dem Stand der Technik vor und während des pneumatischen Ankuppelns des Anhängerfahrzeugs 4 an das Zugfahrzeug 2 am Kupplungskopf "Vorrat" 6 permanent der Vorratsdruck p_{V} von hier beispielhaft 7,5 x 10⁵ Pa an. Gemäß Fig. 1c ist der Kupplungskopf "Bremse" 8 hingegen bei gelöster Betriebsbremse des Zugfahrzeugs 2 vor dem Einlegen der Parkbremse PB im Zugfahrzeug 2 entlüftet (p_{B} = 0 Pa). Mit dem Einlegen der Parkbremse PB im Zugfahrzeug 2 zum Zeitpunkt t₁ wird der Kupplungskopf "Bremse" 8 belüftet und steht kurz danach unter einem dem Vorratsdruck entsprechenden Bremssteuerdruck (p_{B} = 7,5 x 10⁵ Pa). Das nach dem mechanischen Ankoppeln des Anhängerfahrzeugs 4 an das Zugfahrzeug 2 und dem Einlegen der Parkbremse PB im Zugfahrzeug 2 erfolgende Ankoppeln der Vorratsdruckleitung 10 und der Bremssteuerleitung 12 des Anhängerfahrzeugs 4 an die zugeordneten Kupplungsköpfe 6, 8 des Zugfahrzeugs 2 muss daher bei druckführenden Kupplungsköpfen 6, 8 durchgeführt werden, welches aufgrund der dabei entweichenden Druckluft und der wirksamen Luftdruckkräfte vergleichsweise unkomfortabel und schwierig ist.

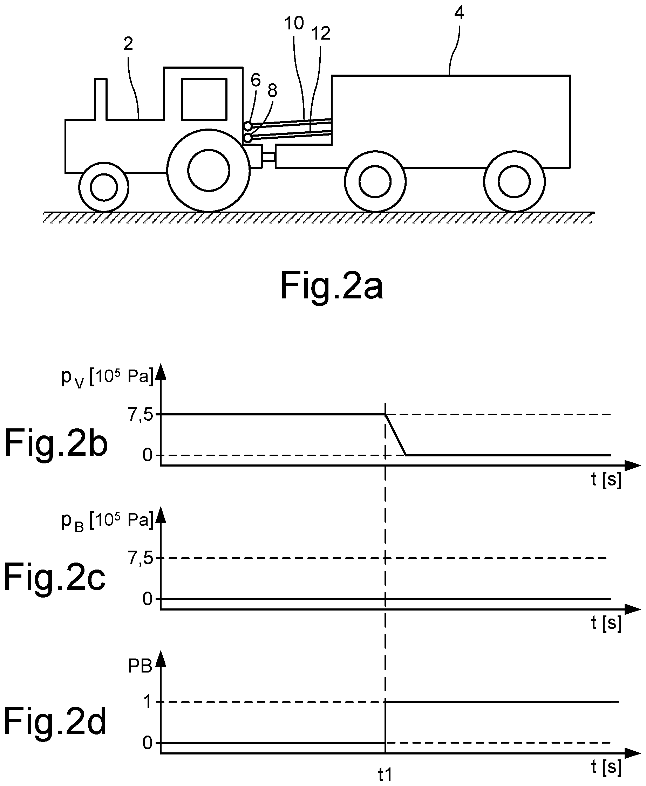

Die Fig. 2a zeigt das gleiche Fahrzeuggespann wie Fig. 1a, an dem auch das erfindungsgemäße Verfahren mit großem Vorteil wie nachfolgend beschrieben betrieben werden kann. Hierzu zeigt Fig. 2b den zeitlichen Druckverlauf des am Kupplungskopf "Vorrat" (rot) 6 anliegenden Vorratsdruckes pv, die Fig. 2c den zeitlichen Druckverlauf des am Kupplungskopf "Bremse" (gelb) 8 des Zugfahrzeugs 2 anliegenden Bremssteuerdruckes p_{B}, und die Fig. 2d den Betätigungszustand der Parkbremse PB des Zugfahrzeugs 2 (0 = "Bremse ausgelegt"; 1 = "Bremse eingelegt") gemäß der Erfindung. Der Kupplungskopf "Vorrat" 6 steht zunächst unter dem Vorratsdruck p_{V} = 7,5 x 10⁵ Pa, er wird jedoch mit dem Einlegen der Parkbremse PB im Zugfahrzeug 2, das zum Zeitpunkt t₁ erfolgt, entlüftet. Zudem wird der Kupplungskopf "Bremse" 8 nach dem Einlegen der Parkbremse PB im Zugfahrzeug 2 nicht belüftet, sondern wird weiterhin entlüftet gehalten (p_{B} = 0 Pa). Das nach dem mechanischen Ankoppeln des Anhängerfahrzeugs 4 an das Zugfahrzeug 2 und dem Einlegen der Parkbremse PB im Zugfahrzeug 2 erfolgende Ankoppeln der Vorrats- und Bremssteuerleitung 10, 12 des Anhängerfahrzeugs 4 an die zugeordneten Kupplungsköpfe 6, 8 des Zugfahrzeugs 2 kann somit erkennbar bei drucklosen Kupplungsköpfen 6, 8 durchgeführt werden, welches gegenüber der bisherigen Praxis deutlich komfortabler und einfacher ist.

Anders ausgedrückt ist gemäß der Erfindung vorgesehen, dass beim Ankoppeln eines mit einer Zweileitungs-Druckluftbremsanlage, also mit einer Vorratsdruckleitung 10 und einer Bremssteuerleitung 12 versehenen Anhängerfahrzeugs 4 an ein Zugfahrzeug 2 beim Einlegen der Parkbremse im Zugfahrzeug 2 der dortige Kupplungskopf "Vorrat" 6 entlüftet wird und der dortige Kupplungskopf "Bremse" 8 entlüftet gehalten wird. Hierdurch können die Kupplungsköpfe des Anhängerfahrzeugs 4 ohne das Entweichen von Druckluft und damit ohne störende Geräusche und Druckluftkräfte an die Kupplungsköpfe 6, 8 des Zugfahrzeugs 2 angeschlossen werden, wodurch auch das Anschließen der Kupplungsköpfe des Anhängerfahrzeugs 4 deutlich vereinfacht und komfortabler als bisher ist.

Nachfolgend werden zunächst vier Verfahrensvarianten des erfindungsgemäßen Verfahrens zur Steuerung einer Ventilanordnung eines Zugfahrzeugs 2 hinsichtlich der Steuerung einer pneumatischen Bremsanlage eines Anhängerfahrzeugs 4 beim Ankoppeln des Anhängerfahrzeugs 4 an das Zugfahrzeug 2 anhand von Druckverläufen des am Kupplungskopf "Vorrat" (rot) 6 anliegenden Vorratsdruckes p_{V} und des am Kupplungskopf "Bremse" (gelb) 8 des Zugfahrzeugs 2 anliegenden Bremssteuerdruckes p_{B} sowie des Betätigungszustandes der Parkbremse des Zugfahrzeugs 2 erläutert.

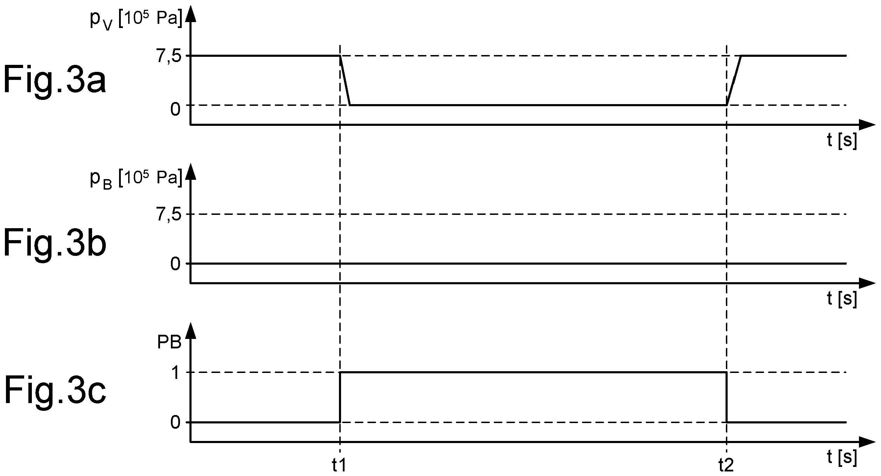

Wie die Figuren 3a bis 3c veranschaulichen ist gemäß einer ersten Verfahrensvariante vorgesehen, dass beginnend mit dem Einlegen der Parkbremse (PB = 1) im Zeitpunkt t₁ bis zum Auslegen oder Lösen der Parkbremse (PB = 0) im Zeitpunkt t₂ die Kupplungsköpfe "Vorrat" und "Bremse" 6, 8 entlüftet werden beziehungsweise entlüftet gehalten werden. Mit dem Einlegen der Parkbremse im Zugfahrzeug 2 zum Zeitpunkt t₁ wird der Kupplungskopf "Vorrat" 6 demnach entlüftet und der Kupplungskopf "Bremse" 8, der dann normalerweise belüftet würde, bleibt entlüftet. Die Radbremsen des Anhängerfahrzeugs werden mit dem Anschließen der Vorratsleitung 10 und der Bremssteuerleitung 12 des Anhängerfahrzeugs 4 an die Kupplungsköpfe 6, 8 des Zugfahrzeugs 2 dennoch eingelegt, weil diese über ein Anhängerbremsventil aufgrund der drucklosen Vorratsleitung 10 in dessen Abrisssicherungsfunktion betätigt werden.

Der drucklose Zustand der beiden Kupplungsköpfe 6, 8 wird solange beibehalten, bis die Parkbremse im Zugfahrzeug gelöst wird (PB = 0), welches zum Zeitpunkt t₂ erfolgt. Der Kupplungskopf "Vorrat" 6 des Zugfahrzeugs 2 und damit auch die Vorratsleitung 10 des Anhängerfahrzeugs 4 werden dann mit dem Vorratsdruck von p_{V} = 7,5 x 10⁵ Pa belüftet. Der Kupplungskopf "Bremse" 8 des Zugfahrzeugs 2 und damit auch die Bremssteuerleitung 12 des Anhängerfahrzeugs 4 bleibt dagegen entlüftet beziehungsweise drucklos, da die Parkbremse nun wieder ausgelegt ist.

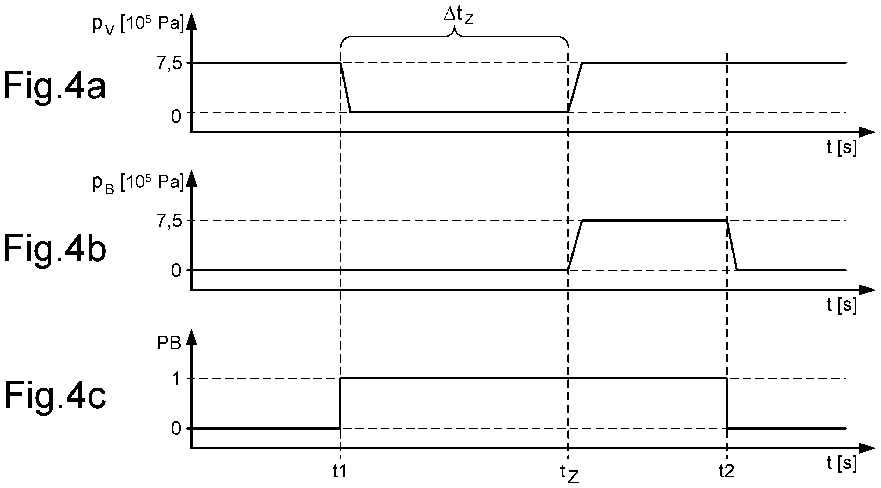

Gemäß einer zweiten Verfahrensvariante, welche nachfolgend mithilfe der Figuren 4a bis 4c erläutert wird, ist vorgesehen, dass die Kupplungsköpfe "Vorrat" und "Bremse" 6, 8 über einen vorbestimmten Zeitraum Δt_{Z} entlüftet gehalten werden. Dieser Zeitraum Δt_{Z} ist derart bemessen, dass ein Fahrer innerhalb dieses Zeitraums bequem in der Lage ist, das Fahrerhaus des Zugfahrzeugs 2 zu verlassen, den Kupplungsbereich des Zugfahrzeugs 2 aufzusuchen, und die Kupplungsköpfe des Anhängerfahrzeugs 4 an die Kupplungsköpfe 6, 8 des Zugfahrzeugs 2 anzuschließen. Nach Ablauf dieses Zeitraums Δt_{Z} zum Zeitpunkt tz werden sowohl der Kupplungskopf "Vorrat" 6 als auch der Kupplungskopf "Bremse" 8 mit dem Vorratsdruck belüftet, sodass die Radbremsen des Anhängerfahrzeugs 4 trotz der nun druckführenden Vorratsdruckleitung 10 eingelegt bleiben. Erst mit dem Auslegen der Parkbremse zum Zeitpunkt t₂ wird der Kupplungskopf "Bremse" 8 des Zugfahrzeugs 2 und damit auch die Bremssteuerleitung 12 des Anhängerfahrzeugs 4 entlüftet, wodurch die Radbremsen des Anhängerfahrzeugs 4 gelöst werden.

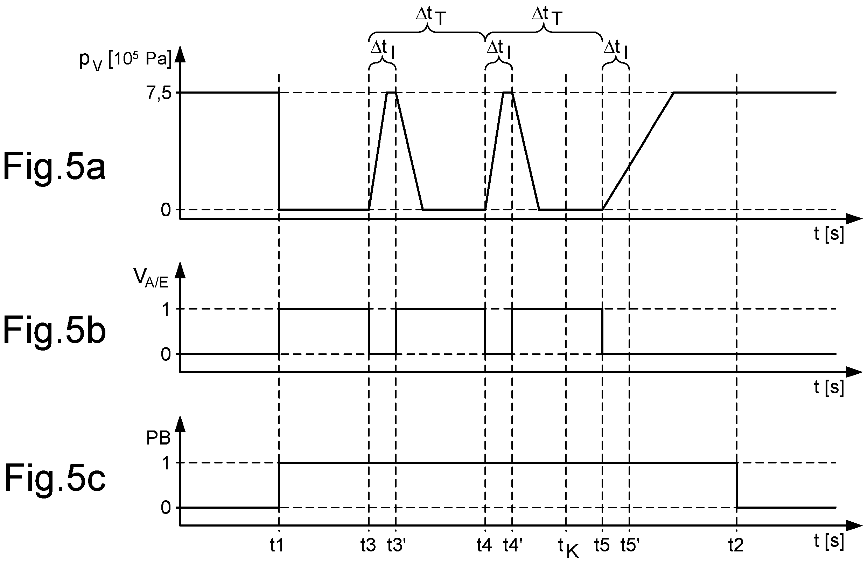

Gemäß einer dritten Verfahrensvariante, welche nachfolgend mithilfe der Figuren 5a bis 5c erläutert wird, ist vorgesehen, dass während der Entlüftung der Kupplungsköpfe "Vorrat" und "Bremse" 6, 8 in einem vorgegebenen Zeittakt Δt_{T} Druckimpulse in die zu dem Kupplungskopf "Vorrat" 6 führende Vorratsdruckleitung eingesteuert werden, dass der Druckgradient in der Vorratsdruckleitung sensorisch gemessen wird, und dass die beiden Kupplungsköpfe 6, 8 entlüftet gehalten werden, sofern ein hoher Druckgradient vorliegt, und dass die Entlüftung der Kupplungsköpfe 6, 8 beendet wird, wenn ein niedriger Druckgradient vorliegt.

Zur Veranschaulichung dieser Verfahrensvariante ist in dem Diagramm der Fig. 5a der Druckverlauf des am Kupplungskopf "Vorrat" (rot) 6 anliegenden Vorratsdruckes p_{V}, in dem Diagramm der Fig. 5b der Schaltzustand eines in der betreffenden Vorratsdruckleitung zwischen einem Vorratsdruckausgang eines Anhängersteuerventils und dem Kupplungskopf "Vorrat" 6 angeordneten Absperr- und Entlüftungsventils V_{A/E} (0 = unbetätigt, 1 = umgeschaltet), und in dem Diagramm der Fig. 5c der Betätigungszustand der Parkbremse PB des Zugfahrzeugs 2 (0 = ausgelegt, 1 = eingelegt) jeweils über der Zeit t abgebildet. Über das unbetätigte Absperr- und Entlüftungsventil V_{A/E} ist der Kupplungskopf "Vorrat" 6 mit dem Vorratsdruckausgang des Anhängersteuerventils verbunden. Im umgeschalteten beziehungsweise betätigten Zustand des Absperr- und Entlüftungsventils V_{A/E} ist der Vorratsdruckausgang des Anhängersteuerventils abgesperrt sowie der Kupplungskopf "Vorrat" 6 mit einem Entlüftungsausgang verbunden und somit drucklos.

Zum Zeitpunkt t1 wird die Parkbremse PB im Zugfahrzeug eingelegt (PB = 1), welches zur Umschaltung des Absperr- und Entlüftungsventils V_{A/E} führt (V_{A/E} = 1), sodass der Kupplungskopf "Vorrat" 6 entlüftet wird. Ab dem Zeitpunkt t3 wird durch kurzzeitiges Abschalten des Absperr- und Entlüftungsventils V_{A/E} in einem zeitlichen Abstand von Δt_{T} wiederholt ein Druckimpuls in die Vorratsdruckleitung eingesteuert und der sich dabei einstellende Druckgradient sensorisch gemessen. Die zwischen den Zeitpunkten t3 und t3', t4 und t4' sowie t5 und t5' eingesteuerten Druckimpulse weisen eine Impulsdauer Δt_{I} von etwa 1 Sekunde auf. Der Zeittakt Δt_{T} der Druckimpulse kann beispielsweise 10 Sekunden betragen. Die ersten beiden Druckimpulse (zwischen den Zeitpunkten t3 und t3' sowie t4 und t4') haben einen hohen Druckgradienten zur Folge, welcher auf ein geringes Leitungsvolumen und einen noch nicht erfolgten Anschluss der Vorratsdruckleitung 10 des Anhängerfahrzeugs 4 an den Kupplungskopf "Vorrat" 6 des Zugfahrzeugs 2 schließen lässt. Daher werden beide Kupplungsköpfe 6, 8 zunächst weiterhin entlüftet gehalten.

Zu dem späteren Zeitpunkt t_{K} wird die Vorratsdruckleitung 10 des Anhängerfahrzeugs 4 an den Kupplungskopf "Vorrat" 6 angeschlossen, sodass der nachfolgende dritte Druckimpuls (zwischen den Zeitpunkten t5 und t5') aufgrund des vergrößerten Leitungsvolumens einen niedrigeren Druckgradienten als zuvor bewirkt. Daher wird die Entlüftung des Kupplungskopfes "Vorrat" 6 durch die dauerhafte Abschaltung des Absperr- und Entlüftungsventils V_{A/E} beendet (V_{A/E} = 0) und auch der Kupplungskopf "Bremse" 8 wieder belüftet, wodurch ein Lösen der Radbremsen des Anhängerfahrzeugs 4 vermieden wird. Dabei wird davon ausgegangen, dass das Anschließen der Vorratsdruckleitung 10 des Anhängerfahrzeugs 4 an den Kupplungskopf "Vorrat" 6 des Zugfahrzeugs 2 wie üblich unmittelbar nach dem Anschließen der Bremssteuerleitung 12 an den Kupplungskopf "Bremse" 8 erfolgt. Der Kupplungskopf "Bremse" 8 wird erst dann wieder entlüftet, wenn die Parkbremse PB im Zugfahrzeug 2 ausgelegt wird, welches zum Zeitpunkt t2 erfolgt. Da die Radbremsen des Anhängerfahrzeugs 4 aufgrund des entlüfteten Kupplungskopfes "Bremse" 8 durch die impulsförmige Belüftung des Kupplungskopfes "Vorrat" 6 kurzzeitig gelöst werden können, kann es zu einem kurzzeitigen Anrollen des Fahrzeuggespanns 2, 4 kommen, sofern die Parkbremsen des Zugfahrzeugs 2 zu schwach sind, dies zu verhindern.

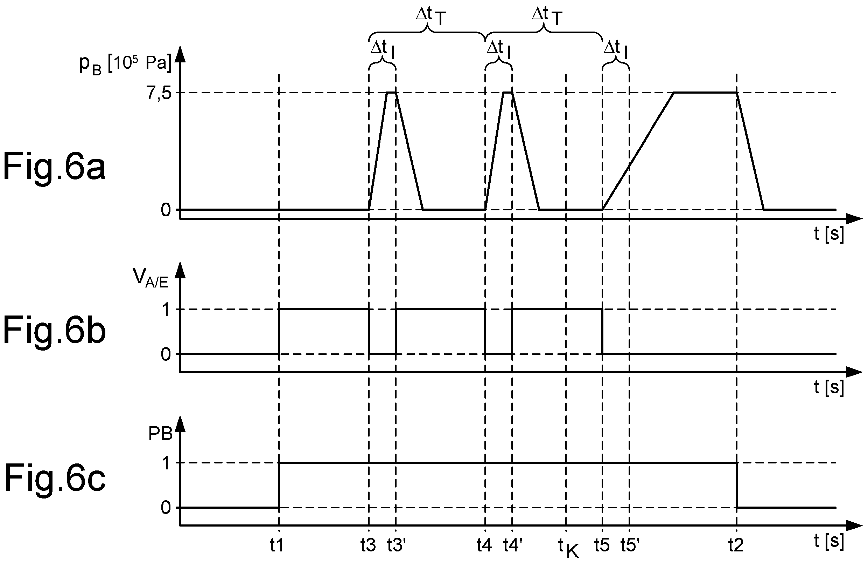

Gemäß einer vierten Verfahrensvariante, welche nachfolgend anhand der Figuren 6a bis 6c erläutert wird, besteht der gerade beschriebene Nachteil nicht. Hierbei ist vorgesehen, dass während der Entlüftung der Kupplungsköpfe "Vorrat" und "Bremse" 6, 8 in einem vorgegebenen Zeittakt Δt_{T} Druckimpulse in die zu dem Kupplungskopf "Bremse" 8 führende Bremssteuerleitung eingesteuert werden, dass der Druckgradient in der Bremssteuerleitung sensorisch gemessen wird, dass die Kupplungsköpfe 6, 8 entlüftet gehalten werden, wenn ein hoher Druckgradient vorliegt, und dass die Entlüftung der Kupplungsköpfe 6, 8 beendet wird, sofern ein niedriger Druckgradient vorliegt.

Zur Veranschaulichung dieser Verfahrensvariante sind in der Fig. 6a der Druckverlauf des am Kupplungskopf "Bremse" (gelb) 8 anliegenden Bremssteuerdruckes p_{B}, in der Fig. 6b der Schaltzustand eines in der betreffenden Bremssteuerleitung zwischen einem Bremssteuerausgang eines Anhängersteuerventils und dem Kupplungskopf "Bremse" 8 angeordneten Absperr- und Entlüftungsventils V_{A/E} (0 = unbetätigt, 1= umgeschaltet), sowie Fig. 6c der Betätigungszustand der Parkbremse PB (0 = ausgelegt, 1 = eingelegt) des Zugfahrzeugs 2 jeweils über der Zeit t abgebildet. Über das unbetätigte Absperr- und Entlüftungsventil V_{A/E} ist der Kupplungskopf "Bremse" 8 mit dem Bremssteuerausgang des Anhängersteuerventils verbunden. Im umgeschalteten Zustand des Absperr- und Entlüftungsventils V_{A/E} ist der Bremssteuerausgang des Anhängersteuerventils abgesperrt und der Kupplungskopf "Bremse" 8 mit einem Entlüftungsausgang verbunden und somit drucklos.

Zum Zeitpunkt t1 wird die Parkbremse PB im Zugfahrzeug eingelegt (PB = 1), welches zur Umschaltung des Absperr- und Entlüftungsventils V_{A/E} führt (V_{A/E} = 1), sodass der Kupplungskopf "Bremse" 8 weiterhin entlüftet gehalten wird. Ab dem Zeitpunkt t3 wird durch kurzzeitiges Abschalten des Absperr- und Entlüftungsventils V_{A/E} in einem zeitlichen Abstand von Δt_{I} wiederholt ein Druckimpuls in die Bremssteuerleitung eingesteuert und der sich dabei einstellende Druckgradient sensorisch gemessen. Die zwischen den Zeitpunkten t3 und t3', t4 und t4' sowie t5 und t5' eingesteuerten Druckimpulse weisen eine Impulsdauer Δt_{I} von etwa 1 Sekunde auf. Der Zeittakt Δt_{T} der Druckimpulse kann beispielsweise 10 Sekunden betragen. Die ersten beiden Druckimpulse (zwischen den Zeitpunkten t3 und t3' sowie t4 und t4') haben einen hohen Druckgradienten zur Folge, der auf ein geringes Leitungsvolumen und einen noch nicht erfolgten Anschluss der Bremssteuerleitung 12 des Anhängerfahrzeugs 4 an den Kupplungskopf "Bremse" 8 des Zugfahrzeugs 2 schließen lässt. Daher werden beide Kupplungsköpfe 6, 8 zunächst weiterhin entlüftet gehalten.

Zu dem späteren Zeitpunkt t_{K} wird die Bremssteuerleitung 12 des Anhängerfahrzeugs 4 an den Kupplungskopf "Bremse" 8 des Zugfahrzeugs 2 angeschlossen, sodass der nachfolgende dritte Druckimpuls (zwischen den Zeitpunkten t5 und t5') aufgrund des vergrößerten Leitungsvolumens einen niedrigeren Druckgradienten als zuvor bewirkt. Daher wird die Entlüftung des Kupplungskopfes "Bremse" 8 durch die dauerhafte Abschaltung des Absperr- und Entlüftungsventils V_{A/E} (V_{A/E} = 1) beendet und auch der Kupplungskopf "Vorrat" 6 wieder belüftet, wodurch ein Lösen der Radbremsen des Anhängerfahrzeugs 4 vermieden wird. Dabei wird davon ausgegangen, dass das Anschließen der Bremssteuerleitung 12 des Anhängerfahrzeugs 4 an den Kupplungskopf "Bremse" 8 des Zugfahrzeugs 2 wie üblich unmittelbar vor dem Anschließen der Vorratsdruckleitung 10 an den Kupplungskopf "Vorrat" 6 erfolgt. Der Kupplungskopf "Bremse" 8 wird erst dann wieder entlüftet, wenn die Parkbremse PB im Zugfahrzeug 2 ausgelegt wird, welches zum Zeitpunkt t2 erfolgt.

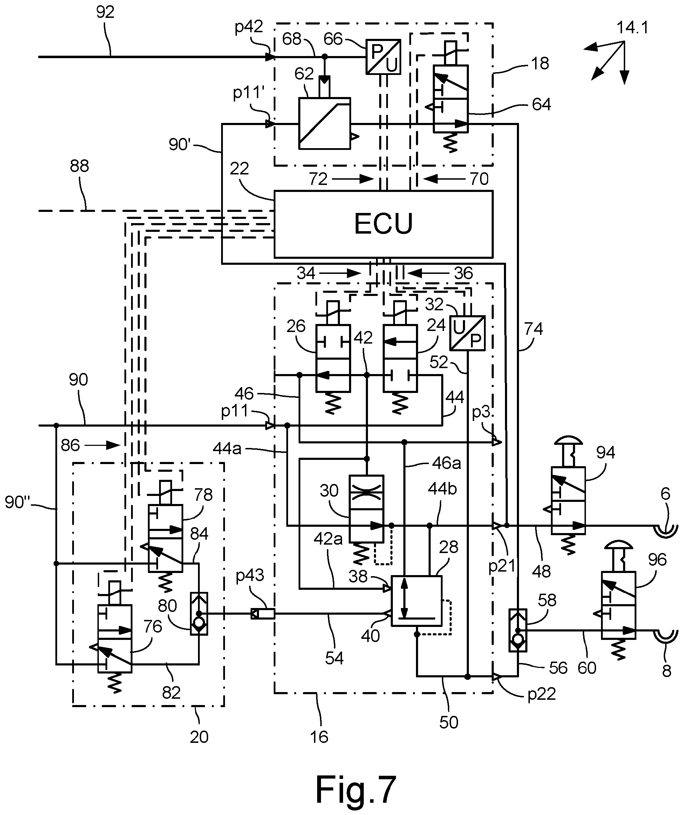

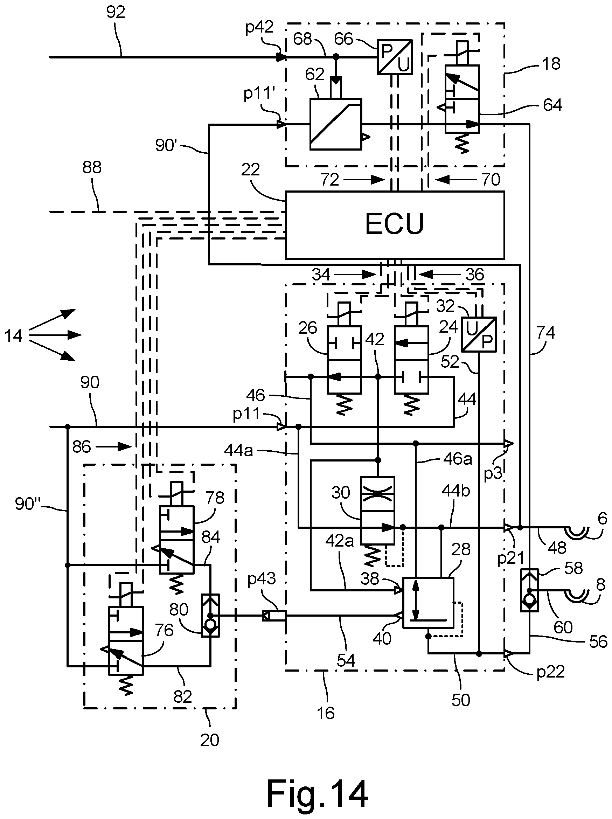

Nachfolgend werden sechs Ausführungsformen von erfindungsgemäßen Ventilanordnungen 14.1, 14.2, 14.3, 14.3', 14.4, 14.5, 14.6 eines Zugfahrzeugs 2 zur Steuerung einer pneumatischen Bremsanlage eines Anhängerfahrzeugs 4 anhand von schematischen Abbildungen erläutert. Diese Ventilanordnungen sind erfindungsgemäße Weiterentwicklungen einer in Fig. 14 abgebildeten Ventilanordnung 14 eines hydraulisch gebremsten Zugfahrzeugs, die aus der WABCO-Druckschrift 815 020 082 3 "Druckluftbremsanlage Land- und Forstwirtschaft / Produktkatalog", Seite 105 bekannt ist. Die erste Ausführungsform der erfindungsgemäßen Ventilanordnung 14.1 gemäß Fig. 7 ermöglicht eine direkte manuelle Entlüftung der beiden Kupplungsköpfe 6, 8 zum Ankoppeln der Vorratsleitung 10 und der Bremssteuerleitung 12 eines Anhängerfahrzeugs 4 durch einen Fahrer des Zugfahrzeugs. Die weiteren vier Ausführungsformen der erfindungsgemäßen Ventilanordnung 14.2, 14.3, 14.3', 14.4 ermöglichen eine automatisierte Entlüftung der Kupplungsköpfe 6, 8 zum Ankoppeln der Vorratsleitung 10 und der Bremssteuerleitung 12 eines Anhängerfahrzeugs 4 entsprechend der weiter oben beschriebenen Verfahrensvarianten.

Die in Fig. 14 abgebildete bekannte Ventilanordnung 14 weist ein elektronisch gesteuertes Anhängersteuerventil 16, ein hydraulisch gesteuertes Backupventil 18, ein elektronisch gesteuertes Parkbremsmodul 20 sowie ein elektronisches Steuergerät (ECU) 22 auf. Bei dem Parkbremsmodul 20 handelt es sich um eine bauliche oder auch nur zeichnerische enge Zusammenstellung mehrerer schaltungstechnisch zusammenwirkender Bauteile, welches noch genauer beschrieben wird.

Das Anhängersteuerventil 16 weist ein pneumatisch steuerbares Relaisventil 28, ein pneumatisch steuerbares Abrissventil 30, ein Einlassventil 24, ein Auslassventil 26 und einen pneumatischen Drucksensor 32 auf. Das Einlassventil 24 und das Auslassventil 26 sind jeweils als ein 2/2-Wege-Magnetschaltventil, insbesondere als Taktventil, ausgebildet, mittels denen der an einem Steuereingang 38 des Relaisventils 28 anliegende pneumatische Steuerdruck einstellbar ist. Die Schaltmagnete des Einlassventils 24 und des Auslassventils 26 sind über elektrische Steuerleitungen 34 und der Drucksensor 32 über eine elektrische Sensorleitungen 36 mit dem elektronischen Steuergerät 22 verbunden.

Das Einlassventil 24 ist im unbestromten Zustand geschlossen und im bestromten Zustand geöffnet. Das Auslassventil 26 ist im unbestromten Zustand geöffnet und im bestromten Zustand geschlossen. Eine Steuerdruckleitung 42, die von dem Ausgang des Einlassventils 24 und von dem Eingang des Auslassventils 26 zu einem Steuereingang des Abrissventils 30 sowie über einen Leitungszweig 42a an einen direkten ersten Steuereingang 38 des Relaisventils 28 führt, ist über das Einlassventil 24 mit einer internen Vorratsdruckleitung 44 sowie über das Auslassventil 26 mit einer zu einem Entlüftungsausgang p3 führenden Entlüftungsleitung 46 verbindbar. Die interne Vorratsdruckleitung 44 ist an einen Vorratsdruckeingang p11 des Anhängersteuerventils 16 angeschlossen.

Im eingebauten Zustand des Anhängersteuerventils 16 ist an den Vorratsdruckeingang p11 eine externe Vorratsdruckleitung 90 einer pneumatischen Druckluftversorgungsanlage des Zugfahrzeugs 2 angeschlossen, welche bei laufendem Antriebsmotor des Zugfahrzeugs 2 einen Vorratsdruck von etwa 7,5 x 10⁵ Pa führt. Ein von der Vorratsdruckleitung 44 abzweigender Leitungsabschnitt 44a ist über das Abrissventil 30 und einen ausgangsseitigen Leitungsabschnitt 44b an einen Vorratsdruckausgang p21 des Anhängersteuerventils 16 geführt. An den Vorratsdruckausgang p21 ist über eine externe Vorratsdruckleitung 48 ein Kupplungskopf "Vorrat" (rot) 6 angeschlossen.

Ein Vorratsdruckeingang des Relaisventils 28 ist über den abzweigenden Leitungsabschnitt 44a und den ausgangsseitigen Leitungsabschnitt 44b an die interne Vorratsdruckleitung 44 angeschlossen. Ein Entlüftungsausgang des Relaisventils 28 ist über eine Anschlussleitung 46a an die zu dem Entlüftungsausgang p3 führende Entlüftungsleitung 46 angeschlossen. Ein Bremssteuerausgang des Relaisventils 28 ist über eine ausgangsseitige Bremssteuerleitung 50 an einen Bremssteuerausgang p22 des Anhängersteuerventils 16 geführt. Eine an den Bremssteuerausgang p22 angeschlossene Bremssteuerleitung 56 ist an einen ersten Eingang eines Wechselventils 58 geführt, an dessen Ausgang über eine externe Bremssteuerleitung 60 ein Kupplungskopf "Bremse" (gelb) 8 angeschlossen ist. Der anhängersteuerventilseitige Drucksensor 32 ist über eine Sensordruckleitung 52 an die ausgangsseitige Bremssteuerleitung 50 angeschlossen. Eine weitere interne Steuerdruckleitung 54 ist zwischen einem invertierten Steuereingang p43 des Anhängersteuerventils 16 und einem invertierten, zweiten Steuereingang 40 des Relaisventils 28 angeordnet.

Das Backupventil 18 weist ein hydraulisch steuerbares Relaisventil 62, ein elektronisch steuerbares Redundanzventil 64 und einen hydraulischen Drucksensor 66 auf. Ein Steuereingang des backupventilseitigen Relaisventils 62 ist über eine interne Steuerdruckleitung 68 mit einem hydraulischen Steuerdruckeingang p42 des Backupventils 18 verbunden. Im eingebauten Zustand des Backupventils 18 ist der Steuerdruckeingang p42 des Backupventils 18 über eine Anschlussleitung 92 an eine Bremsleitung eines hydraulischen Bremskreises des Zugfahrzeugs 2 angeschlossen. An die interne Steuerdruckleitung 68 des Backupventils 18 ist auch der backupventilseitige Drucksensor 66 angeschlossen. Ein nicht weiter bezeichneter Vorratsdruckeingang des backupventilseitigen Relaisventils 62 ist über einen Vorratsdruckeingang p11' des Backupventils 18 und eine Anschlussleitung 90' an die zum Kupplungskopf "Vorrat" (rot) 6 führende externe Vorratsdruckleitung 48 angeschlossen. Ein Bremssteuerausgang des Relaisventils 62 des Backupventils 18 ist über das Redundanzventil 64 und eine externe Bremssteuerleitung 74 mit einem zweiten Eingang des Wechselventils 58 verbindbar. Bei druckführendem Vorratsdruckeingang p11' wird in dem Relaisventil 62 in Abhängigkeit des an dem Bremsdruckeingang p42 anliegenden Bremsdruckes ein Bremssteuerdruck ausgesteuert, der bei geöffnetem Redundanzventil 64 über die externe Bremssteuerleitung 74 an das Wechselventil 58 geleitet wird. Das Wechselventil 58 leitet den jeweils höheren Bremssteuerdruck aus der Bremssteuerleitung 56 des Anhängersteuerventils 16 oder aus der Bremssteuerleitung 74 des Backupventils 18 über die Bremssteuerleitung 60 an den Kupplungskopf "Bremse" 8 weiter.

Das Redundanzventil 64 ist als ein 3/2-Wege-Magnetschaltventil ausgebildet, dessen Ausgang über die externe Bremssteuerleitung 74 an den zweiten Eingang des Wechselventils 58 angeschlossen ist. Im unbestromten Zustand befindet sich das Redundanzventil 64 in der in Fig. 14 abgebildeten Offenstellung, in der die externe Bremssteuerleitung 74 mit dem Bremssteuerausgang des Relaisventils 62 verbunden ist. Im bestromten Zustand ist das Redundanzventil 64 aus der in Fig. 14 abgebildeten Offenstellung in seine Sperrstellung umgeschaltet, in welcher der Bremssteuerausgang des Relaisventils 62 abgesperrt und die externe Bremssteuerleitung 74 mit einem Entlüftungsausgang des Redundanzventils 64 verbunden und somit drucklos ist. Der Schaltmagnet des Redundanzventils 64 ist über elektrische Steuerleitungen 70 und der Drucksensor 66 über elektrische Sensorleitungen 72 mit dem elektronischen Steuergerät 22 verbunden.

Das Parkbremsmodul 20 dient zur Ansteuerung des Anhängersteuerventils 16 an dem invertierten Steuerdruckeingang p43 zur Betätigung der Radbremsen eines angekoppelten Anhängerfahrzeugs 4 in einer Parkbrems- oder Hilfsbremsfunktion. Das Parkbremsmodul 20 umfasst in dieser Ausführungsform zwei parallel geschaltete Parkbremsventile 76, 78 und ein diesen ausgangsseitig nachgeschaltetes parkbremsmodulseitiges Wechselventil 80. Im eingebauten Zustand des Parkbremsmoduls 20 ist der Ausgang des Wechselventils 80 an den invertierten Steuerdruckeingang p43 des Anhängersteuerventils 16 angeschlossen.

Die beiden Parkbremsventile 76, 78 sind als 3/2-Wege-Magnetschaltventile ausgeführt, deren Schaltmagnete im eingebauten Zustand des Parkbremsmoduls 20 über elektrische Steuerleitungen 86 mit dem elektronischen Steuergerät 22 verbunden sind. Das elektronische Steuergerät 22 steht über einen Datenbus 88, bei dem es sich üblicherweise um einen CAN-Bus handelt, auch mit weiteren elektronischen Steuergeräten, Sensoren und Schaltern des Zugfahrzeugs 2 sowie eines angekoppelten Anhängerfahrzeugs 4 in Verbindung. Über die beiden Parkbremsventile 76, 78 ist jeweils eine an einen der Eingänge des Wechselventils 80 angeschlossene Bremssteuerleitung 82, 84 wechselweise mit einem Zweig eines von der externen Vorratsdruckleitung 90 abzweigenden Leitungsabschnittes 90" oder mit einem Entlüftungsausgang verbindbar. Das parkbremsmodulseitige Wechselventil 80 leitet den jeweils höheren Bremssteuerdruck aus der Bremssteuerleitung 82 des ersten Parkbremsventils 76 oder aus der Bremssteuerleitung 84 des zweiten Parkbremsventils 78 über den invertierten Bremssteuerdruckeingang p43 des Anhängersteuerventils 16 und die dortige interne Bremssteuerleitung 54 an den invertierten Steuereingang 40 des Relaisventils 28 weiter. Das eine Parkbremsventil, beispielsweise erste Parkbremsventil 76, dient dabei als Hauptparkbremsventil und das zweite Parkbremsventil 78 dient als Redundanz-Parkbremsventil, welches im Fehlerfall anstelle des Hauptparkbremsventils wirksam wird. Die von den beiden Parkbremsventilen 76, 78 jeweils weitergeleiteten Drücke sind identisch.

Im unbestromten Zustand der beiden Parkbremsventile 76, 78 sind die zugeordneten Bremssteuerleitungen 82, 84 und damit der invertierte Steuereingang 40 des Relaisventils 28 drucklos geschaltet. Hierdurch wird in dem Relaisventil 28 des Anhängersteuerventils 16 ein maximaler Bremssteuerdruck ausgesteuert, welcher über die interne Bremssteuerleitung 50, den Bremssteuerausgang p22, die Bremssteuerleitung 56, das erste Wechselventil 58 und die externe Bremssteuerleitung 60 an den Kupplungskopf "Bremse" (gelb) 8 geführt wird. Hierdurch werden bei einem angekoppelten Anhängerfahrzeug 4 dessen Radbremszylinder über das dortige Anhängerbremsventil mit einem maximalen Bremsdruck beaufschlagt, wodurch die dortigen Radbremsen in der Parkbrems- oder Hilfsbremsfunktion eingelegt werden.

Bei einer Betätigung, also Umschaltung eines der beiden Parkbremsventile 76, 78 wird die betreffende Bremssteuerleitung 82; 84 und damit der invertierte Steuereingang 40 des Relaisventils 28 aus dem Leitungsabschnitt 90" der externen Vorratsdruckleitung 90 mit dem Vorratsdruck beaufschlagt. Hierdurch werden bei einem angekoppelten Anhängerfahrzeug 4 dessen Radbremszylinder über das dortige Anhängerbremsventil entlüftet, wodurch die dortigen Radbremsen in der Parkbrems- oder Hilfsbremsfunktion gelöst werden. Im normalen Fahrbetrieb des Zugfahrzeugs ist eines der beiden Parkbremsventile 76; 78 bestromt und somit umgeschaltet, sodass die Radbremsen eines angekoppelten Anhängerfahrzeugs 4 dann gelöst sind. Das zweite Parkbremsventil der beiden Parkbremsventile 76; 78 bleibt in deaktivierter Stellung und wird wie erwähnt nur im Fehlerfall aktiviert. Aus Redundanzgründen weist das elektronische Steuergerät 22 separate Schalteinheiten zur unabhängigen Schaltbetätigung der Parkbremsventile 76, 78 auf, die derart ausgebildet sind, dass der jeweilige Schaltzustand der Parkbremsventile 76, 78 selbsttätig gehalten wird und nur aktiv geändert werden kann.

Im Normalbetrieb dieser bekannten Ventilanordnung 14 ist das Anhängersteuerventil 16 aktiviert und das Backupventil 18 deaktiviert. Ebenso ist das Parkbremsmodul 20 dann solange deaktiviert, wie in dem elektronischen Steuergerät 22 kein Anforderungssignal zur Betätigung der Radbremsen des Anhängerfahrzeugs 4 in einer Parkbrems- oder Hilfsbremsfunktion vorliegt. Beispielsweise erfolgt die Aktivierung des Anhängersteuerventils 16 und die Deaktivierung des Backupventils 18 über das Schaltsignal eines elektrischen Schalters, der in oder an einem hier nicht abgebildeten Fußbremsventil des Zugfahrzeugs 2 angeordnet ist und nach kurzem Leerweg eines über ein Bremspedal axial verschiebbaren Stößels geschlossen wird. Bei Vorliegen des entsprechenden Schaltsignals, das einen beginnenden Bremsvorgang anzeigt, wird das Backupventil 18 durch die Umschaltung des Redundanzventils 64 in seine Sperrstellung deaktiviert.

In dem Anhängersteuerventil 16 wird dann über eine entsprechende Ansteuerung der dortigen Einlass- und Auslassventile 24, 26 in Abhängigkeit eines vorliegenden elektronischen Bremswertsignals ein an dem direkten Steuereingang 38 des Relaisventils 28 anliegender Steuerdruck ausgesteuert. Dieser Steuerdruck wird in dem Relaisventil 28 in einen entsprechenden Bremssteuerdruck umgewandelt, welcher über das erste Wechselventil 58 an den Kupplungskopf "Bremse" (gelb) 8 geführt wird. Das entsprechende Bremswertsignal kann über einen in oder an dem Fußbremsventil angeordneten Wegsensor mit einem mit dem dortigen Stößel in Stellverbindung stehenden Signalgeber erfasst werden. Das Bremswertsignal kann aber auch mittels eines an eine Bremsleitung des Zugfahrzeugs 2 angeschlossenen Drucksensors erzeugt werden. Vorliegend kann die Funktion des Bremswertsensors daher auch von dem in dem Backupventil 18 angeordneten, über die interne Steuerdruckleitung 68 und die externe Anschlussleitung 92 an eine hydraulische Bremsleitung des Zugfahrzeugs 2 angeschlossenen Drucksensor 66 erfüllt werden. Bis hierhin wurde mit Blick auf die Fig. 14 der bekannte Stand der Technik beschrieben.

Gemäß der in Fig. 7 abgebildeten ersten Ausführungsform einer erfindungsgemäßen Ventilanordnung 14.1 ist sowohl in der Vorratsdruckleitung 48 zwischen dem Vorratsdruckausgang p21 des Anhängersteuerventils 16 und dem Kupplungskopf "Vorrat" 6 als auch in der Bremssteuerleitung 60 zwischen dem Ausgang des ersten Wechselventils 58 und dem Kupplungskopf "Bremse" 8 jeweils ein manuell betätigbares Absperr- und Entlüftungsventil 94, 96 angeordnet. Das zweite Absperr- und Entlüftungsventil 96 könnte jedoch auch in der Bremssteuerleitung 56 zwischen dem Bremssteuerausgang p22 des Anhängersteuerventils 16 und dem ersten Eingang des ersten Wechselventils 58 angeordnet sein.

Die beiden Absperr- und Entlüftungsventile 94, 96 sind als 3/2-Wege-Schaltventile mit einem an den Ausgang p21 des Anhängersteuerventils 16 beziehungsweise dem Ausgang des ersten Wechselventils 58 angeschlossenen Eingangsanschluss, einem an den jeweiligen Kupplungskopf 6, 8 angeschlossenen Ausgangsanschluss und einem Entlüftungsausgang ausgebildet. Im unbetätigten Zustand der Absperr- und Entlüftungsventile 94, 96 ist der jeweilige Eingangsanschluss mit dem Ausgangsanschluss p21 verbunden und der Entlüftungsausgang abgesperrt. Im betätigten Zustand der Absperr- und Entlüftungsventile 94, 96 ist der jeweilige Eingangsanschluss abgesperrt und der Ausgangsanschluss mit dem Entlüftungsausgang verbunden.

Die beiden Absperr- und Entlüftungsventile 94, 96 sind vorliegend beispielhaft jeweils mittels eines Drucktasters manuell schaltbar und in der Schaltstellung verrastbar. Die Verrastung der Absperr- und Entlüftungsventile kann alternativ durch eine nochmalige Betätigung des jeweiligen Drucktasters oder nach einer vorbestimmten Haltezeit unter der Wirkung jeweils einer ventilinternen Rückstellfeder selbsttätig lösbar sein.

Wenn ein Fahrer das Zugfahrzeug 2 zum Ankoppeln eines Anhängerfahrzeugs 4 zurückgesetzt und das Anhängerfahrzeug 4 mechanisch angekoppelt sowie die Parkbremse eingelegt hat, kann er die Kupplungsköpfe 6, 8 des Zugfahrzeugs 2 durch die manuelle Betätigung der Drucktaster der Absperr- und Entlüftungsventile 94, 96 drucklos schalten.

Dadurch ist das Anschließen der Kupplungsköpfe des Anhängerfahrzeugs 4, das in der Reihenfolge Bremssteuerleitung 12 vor Vorratsdruckleitung 10 erfolgen sollte, ohne störende Geräusche und Luftkräfte relativ einfach und komfortabel möglich. Danach werden die Kupplungsköpfe 6, 8 durch die Rückstellung der Absperr- und Entlüftungsventile 94, 96 in ihre Ausgangsstellung, die durch eine nochmalige Betätigung der Drucktaster oder selbsttätig erfolgt, wieder belüftet.

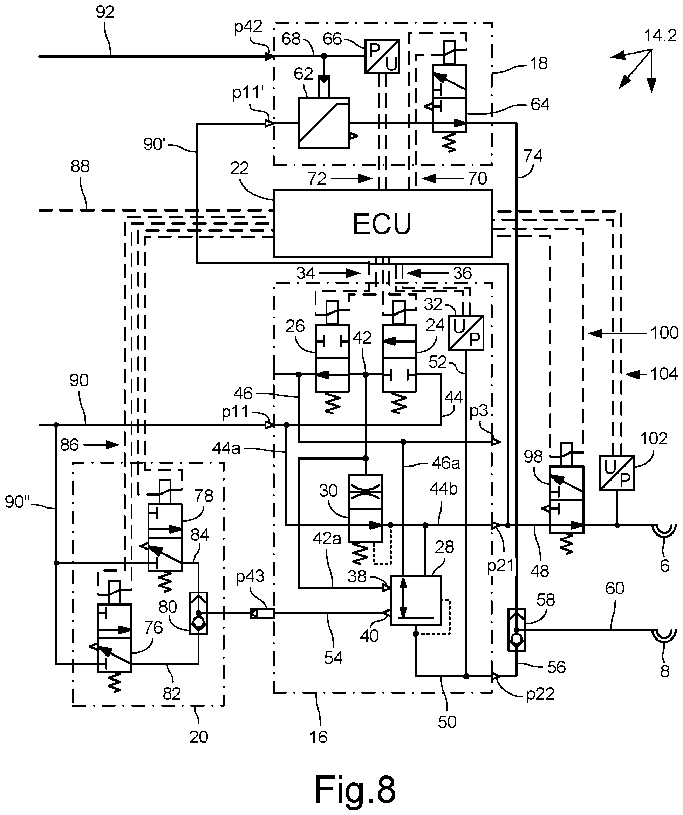

In der in Fig. 8 abgebildeten zweiten Ausführungsform der erfindungsgemäßen Ventilanordnung 14.2 ist nur in der Vorratsdruckleitung 48 zwischen dem Vorratsdruckausgang p21 des Anhängersteuerventils 16 und dem Kupplungskopf "Vorrat" 6 ein elektrisch betätigbares Absperr- und Entlüftungsventil 98 angeordnet, welches über elektrische Steuerleitungen 100 an das elektronische Steuergerät 22 angeschlossen ist. Das Absperr- und Entlüftungsventil 98 ist als ein 3/2-Wege-Magnetschaltventil mit einem an den Vorratsdruckausgang p21 angeschlossenen Eingangsanschluss, einem an den Kupplungskopf "Vorrat" 6 angeschlossenen Ausgangsanschluss und einem Entlüftungsausgang ausgebildet. Im unbestromten Zustand des Absperr- und Entlüftungsventils 98 ist der Eingangsanschluss mit dem Ausgangsanschluss verbunden und der Entlüftungsausgang abgesperrt. Im bestromten Zustand des Absperr- und Entlüftungsventils 98 ist der Eingangsanschluss abgesperrt und der Ausgangsanschluss mit dem Entlüftungsausgang verbunden. Während die Belüftung und Entlüftung des Kupplungskopfes "Vorrat" 6 somit über eine entsprechende Ansteuerung des Absperr- und Entlüftungsventils 98 erfolgt, ist die Belüftung und Entlüftung des Kupplungskopfes "Bremse" 8 über eine entsprechende Ansteuerung des Anhängersteuerventils 16 von dem Parkbremsmodul 20 vorgesehen.

Zur Messung des am Kupplungskopf "Vorrat" 6 anliegenden Vorratsdruckes p_{V} ist an die Vorratsdruckleitung 48 zwischen dem Absperr- und Entlüftungsventil 98 und dem Kupplungskopf "Vorrat" 6 ein pneumatischer Drucksensor 102 angeschlossen, der über elektrische Sensorleitungen 104 mit dem elektronischen Steuergerät 22 verbunden ist. Der am Kupplungskopf "Bremse" anliegende Bremssteuerdruck p_{B} kann dagegen über den innerhalb des Anhängesteuerventils 16 an die interne Bremssteuerleitung 50 angeschlossenen Drucksensor 32 gemessen werden. Der Drucksensor 32 ist hierzu wie bereits erwähnt über eine Sensordruckleitung 52 an die Bremssteuerleitung 50 angeschlossen.

Bei eingelegter Parkbremse im Zugfahrzeug 2 können die Kupplungsköpfe 6, 8 bei dieser Ausführungsform der Ventilanordnung 14.2 durch eine entsprechende Ansteuerung des Absperr- und Entlüftungsventils 98 und des Parkbremsmoduls 20 mittels des elektronischen Steuergeräts 22 entsprechend einer der vier vorbeschriebenen Verfahrensvarianten (siehe Fig. 3 bis Fig. 6) entlüftet werden. Also entsprechend der ersten Verfahrensvariante solange, bis die Parkbremse des Zugfahrzeugs 2 wieder gelöst wird, oder entsprechend der zweiten Verfahrensvariante solange, bis ein vorbestimmter Zeitraum, der für das Anschließen der Kupplungsköpfe des Anhängerfahrzeugs 4 ausreicht, abgelaufen ist, oder entsprechend der dritten Verfahrensvariante solange, bis ein durch kurzzeitiges Öffnen des Absperr- und Entlüftungsventils 98 wiederholt in die Vorratsdruckleitung 48 eingesteuerter Druckimpuls einen niedrigen Druckgradienten ergibt, oder entsprechend der vierten Verfahrensvariante solange, bis ein durch eine entsprechende Ansteuerung des Parkbremsmoduls 20 über das Anhängersteuerventil 16 wiederholt in die Bremssteuerleitung 60 eingesteuerter Druckimpuls einen niedrigen Druckgradienten ergibt.

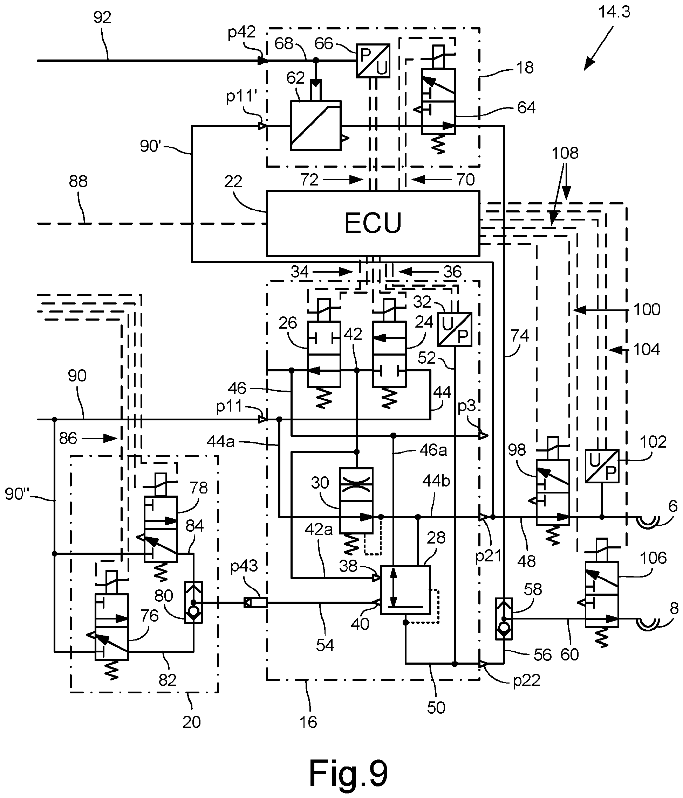

Die in Fig. 9 abgebildete ersten Variante der dritten Ausführungsform der erfindungsgemäßen Ventilanordnung 14.3 unterscheidet sich von der zweiten Ausführungsform der Ventilanordnung 14.2 gemäß Fig. 8 dadurch, dass die beiden Parkbremsventile 76, 78 des Parkbremsmoduls 20 über die Steuerleitungen 86 an ein weiteres, hier nicht abgebildetes elektronisches Steuergerät angeschlossen sind. Dies kann bei einer Ansteuerung des Parkbremsmoduls 20 von dem elektronischen Steuergerät 22 des Anhängersteuerventils 16 zu einem verzögerten Ansprechverhalten führen. Daher ist bei dieser Ausführungsform der Ventilanordnung 14.3 zusätzlich in der Bremssteuerleitung 60 zwischen dem Ausgang des ersten Wechselventils 58 und dem Kupplungskopf "Bremse" 8 ein elektrisch betätigbares Absperr- und Entlüftungsventil 106 angeordnet, das über elektrische Steuerleitungen 108 an das elektronische Steuergerät 22 angeschlossen ist. Dieses Absperr- und Entlüftungsventil 106 könnte jedoch auch in der Bremssteuerleitung 56 zwischen dem Bremssteuerausgang p22 des Anhängersteuerventils 16 und dem ersten Eingang des ersten Wechselventils 58 angeordnet sein.

Dieses Absperr- und Entlüftungsventil 106 ist als ein 3/2-Wege-Magnetschaltventil mit einem an den Ausgang des ersten Wechselventils 58 angeschlossenen Eingangsanschluss, einem an den Kupplungskopf "Bremse" 8 angeschlossenen Ausgangsanschluss und einem Entlüftungsausgang ausgebildet. Im unbestromten Zustand des Absperr- und Entlüftungsventils 106 ist der Eingangsanschluss mit dem Ausgangsanschluss verbunden und der Entlüftungsausgang abgesperrt. Im bestromten Zustand des Absperr- und Entlüftungsventils 106 ist der Eingangsanschluss abgesperrt und der Ausgangsanschluss mit dem Entlüftungsausgang verbunden. Die Belüftung und Entlüftung des Kupplungskopfes "Bremse" 8 erfolgt bei dieser Ausführungsform der Ventilanordnung 14.3 somit über eine entsprechende Ansteuerung des hier zusätzlich integrierten Absperr- und Entlüftungsventils 106.

Bei eingelegter Parkbremse im Zugfahrzeug 2 können die beiden Kupplungsköpfe 6, 8 bei dieser Variante der dritten Ausführungsform der Ventilanordnung 14.3 durch eine entsprechende Ansteuerung der beiden Absperr- und Entlüftungsventile 98, 106 durch das elektronische Steuergerät 22 entsprechend einer der drei ersten vorbeschriebenen Verfahrensvarianten (siehe Fig. 3 bis Fig. 5) entlüftet werden. Also entsprechend der ersten Verfahrensvariante solange, bis die Parkbremse des Zugfahrzeugs 2 wieder gelöst wird, oder entsprechend der zweiten Verfahrensvariante solange, bis ein vorbestimmter Zeitraum, der für das Anschließen der Kupplungsköpfe des Anhängerfahrzeugs 4 ausreicht, abgelaufen ist, oder entsprechend der dritten Verfahrensvariante solange, bis ein durch kurzzeitiges Öffnen des Absperr- und Entlüftungsventils 98 wiederholt in die Vorratsdruckleitung 48 eingesteuerter Druckimpuls einen niedrigen Druckgradienten ergibt.

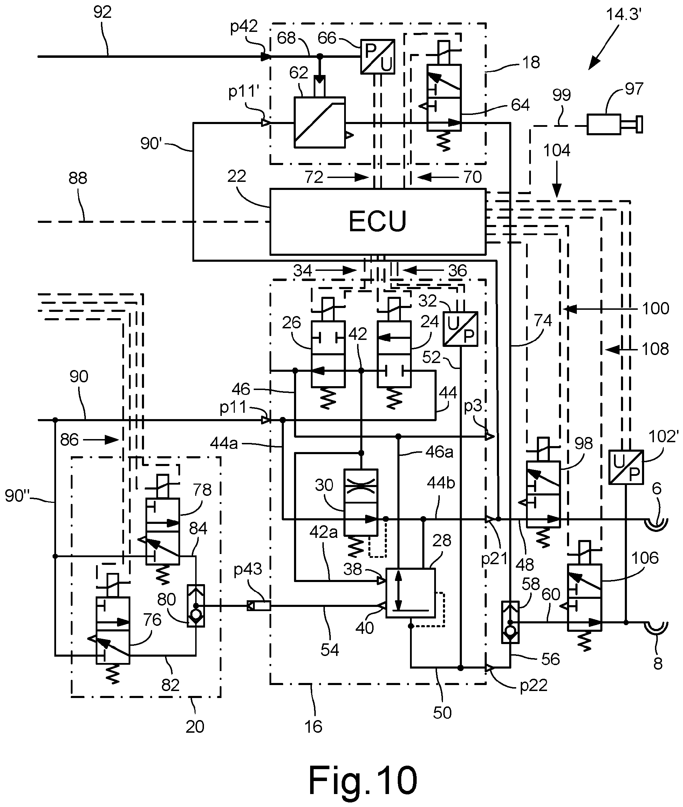

Eine in Fig. 10 abgebildete zweite Variante der dritten Ausführungsform der erfindungsgemäßen Ventilanordnung 14.3' unterscheidet sich von der ersten Variante der dritten Ausführungsform der Ventilanordnung 14.3 gemäß Fig. 9 nur dadurch, dass anstelle des an die Vorratsdruckleitung 48 angeschlossenen pneumatischen Drucksensors 102 ein pneumatischer Drucksensor 102' an die Bremssteuerleitung 60 zwischen dem Absperr- und Entlüftungsventil 106 und dem Kupplungskopf "Bremse" 8 angeschlossen ist.

Bei eingelegter Parkbremse im Zugfahrzeug 2 können die beiden Kupplungsköpfe 6, 8 bei dieser Variante der dritten Ausführungsform der Ventilanordnung 14.3' durch eine entsprechende Ansteuerung der beiden Absperr- und Entlüftungsventile 98, 106 durch das elektronische Steuergerät 22 entsprechend einer der zwei ersten vorbeschriebenen Verfahrensvarianten (siehe Fig. 3 und Fig. 4) sowie der vierten vorbeschriebenen Verfahrensvariante (siehe Fig. 6) entlüftet werden. Also entsprechend der ersten Verfahrensvariante solange, bis die Parkbremse des Zugfahrzeugs 2 wieder gelöst wird, oder entsprechend der zweiten Verfahrensvariante solange, bis ein vorbestimmter Zeitraum, der für das Anschließen der Kupplungsköpfe des Anhängerfahrzeugs 4 ausreicht, abgelaufen ist, oder entsprechend der vierten Verfahrensvariante solange, bis ein durch kurzzeitiges Öffnen des Absperr- und Entlüftungsventils 106 wiederholt in die Bremssteuerleitung 60 eingesteuerter Druckimpuls einen niedrigen Druckgradienten ergibt.

Weiter ist bei der Ventilanordnung 14.3' gemäß Fig. 10 beispielgebend vorgesehen, dass die beiden Absperr- und Entlüftungsventile 98, 106 bei Bedarf von einem Menschen, also in der Regel von dem Fahrer des Zugfahrzeugs 2, manuell indirekt betätigbar sind. Hierzu ist am Heck des Zugfahrzeugs 2 ein manuell betätigbarer elektrischer Schalter 97 angeordnet, welcher über eine Signalleitung 99 mit dem elektronischen Steuergerät 22 verbunden ist. Der Schalter 97 sowie das elektronische Steuergerät 22 sind derartig ausgebildet, dass eine Betätigung dieses Schalters 97 eine Bestromung zumindest eines der beiden Absperr- und Entlüftungsventile 98, 106 und damit eine Absperrung sowie eine Entlüftung des jeweils zugeordneten Kupplungskopfes 6, 8 auslöst. In dessen Folge können die Vorratsleitung 10 und die Bremssteuerleitung 12 eines Anhängerfahrzeugs 4 wie beschrieben bequem sowie geräuschlos an die entlüfteten und abgesperrten Kupplungsköpfe 6, 8 des Zugfahrzeugs 2 angeschlossen werden.

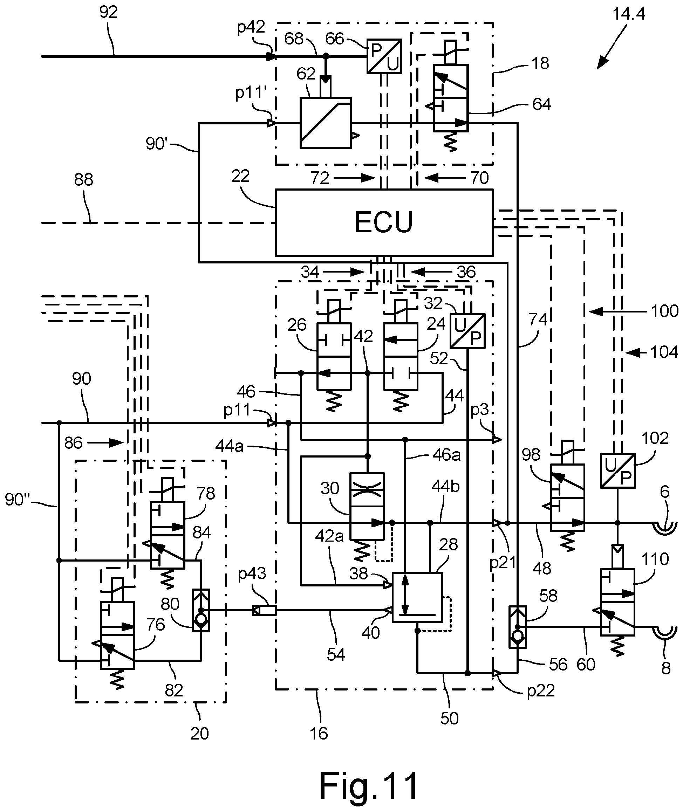

Die in Fig. 11 abgebildete vierte Ausführungsform der erfindungsgemäßen Ventilanordnung 14.4 unterscheidet sich von der ersten Variante der dritten Ausführungsform der Ventilanordnung 14.3 gemäß Fig. 9 dadurch, dass in der Bremssteuerleitung 60 zwischen dem Ausgang des ersten Wechselventils 58 und dem Kupplungskopf "Bremse" 8 ein pneumatisch druckgesteuertes Absperr- und Entlüftungsventil 110 angeordnet ist. Dieses Absperr- und Entlüftungsventil 110 könnte jedoch auch in der Bremssteuerleitung 56 zwischen dem Bremssteuerausgang p22 des Anhängersteuerventils 16 und dem ersten Eingang des ersten Wechselventils 58 angeordnet sein.

Dieses Absperr- und Entlüftungsventil 110 ist als ein 3/2-Wege-Schaltventil mit einem an die Vorratsdruckleitung 48 zwischen dem dortigen Absperr- und Entlüftungsventil 98 und dem Kupplungskopf "Vorrat" 6 angeschlossenen Steuereingang, einem an den Ausgang des ersten Wechselventils 58 angeschlossenen Eingangsanschluss, einem an den Kupplungskopf "Bremse" 8 angeschlossenen Ausgangsanschluss, und einem Entlüftungsausgang ausgebildet. Bei drucklosem Steuereingang dieses Absperr- und Entlüftungsventils 110 ist der Eingangsanschluss abgesperrt und der Ausgangsanschluss mit dem Entlüftungsausgang verbunden. Bei druckführendem Steuereingang des Absperr- und Entlüftungsventils 110 ist der Eingangsanschluss mit dem Ausgangsanschluss verbunden und der Entlüftungsausgang abgesperrt. Somit ist der Kupplungskopf "Bremse" 8 dann belüftet, wenn der Kupplungskopf "Vorrat" 6 belüftet und somit druckführend ist, und dann entlüftet, wenn der Kupplungskopf "Vorrat" 6 entlüftet und somit drucklos ist.

Bei eingelegter Parkbremse im Zugfahrzeug 2 können die beiden Kupplungsköpfe 6, 8 bei dieser Ausführungsform der Ventilanordnung 14.4 durch eine entsprechende Ansteuerung des Absperr- und Entlüftungsventils 98 durch das elektronische Steuergerät 22 entsprechend einer der drei ersten vorbeschriebenen Verfahrensvarianten (siehe Fig. 3 bis Fig. 5) entlüftet werden. Also entsprechend der ersten Verfahrensvariante solange, bis die Parkbremse des Zugfahrzeugs 2 wieder gelöst wird, oder entsprechend der zweiten Verfahrensvariante solange, bis ein vorbestimmter Zeitraum, der für das Anschließen der Kupplungsköpfe des Anhängerfahrzeugs 4 ausreicht, abgelaufen ist, oder entsprechend der dritten Verfahrensvariante solange, bis ein durch kurzzeitiges Öffnen des Absperr- und Entlüftungsventils 98 wiederholt in die Vorratsdruckleitung 48 eingesteuerter Druckimpuls einen niedrigen Druckgradienten ergibt.

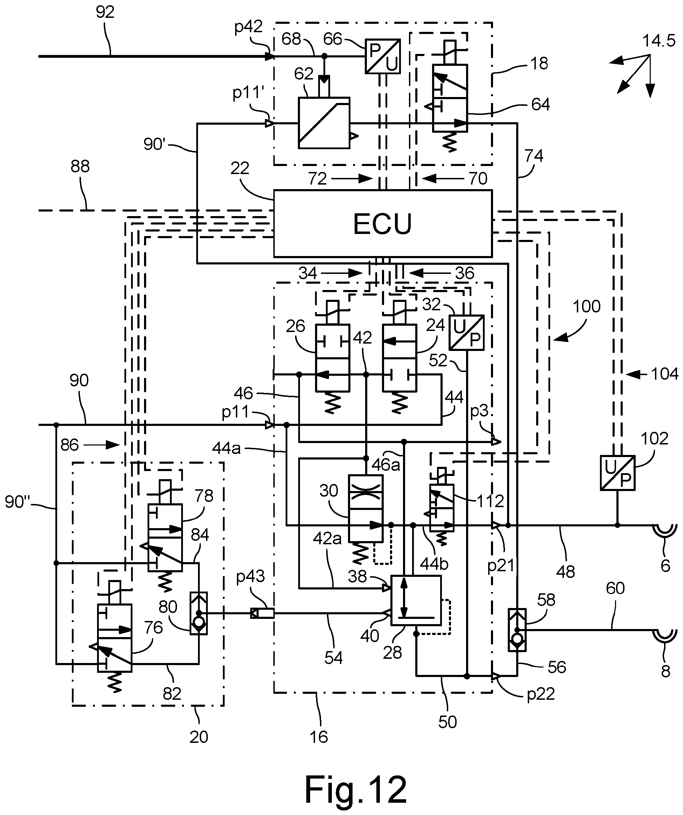

Die in Fig. 12 beispielhaft abgebildete fünfte Ausführungsform der erfindungsgemäßen Ventilanordnung 14.5 unterscheidet sich von der zweiten Ausführungsform der Ventilanordnung 14.2 gemäß Fig. 8 bei gleichwirkender Funktionsweise dadurch, dass das elektronisch gesteuerte Absperr- und Entlüftungsventil 112 nun unmittelbar vor dem Versorgungsdruckausgang p21 des Anhängersteuerventils 16 in einer dortigen internen Versorgungsdruckleitung 44b angeordnet ist. Dabei sind sowohl diese Versorgungsdruckleitung 44b als auch das Absperr- und Entlüftungsventil 112 baulich in dem Anhängersteuerventil 16 integriert ausgebildet beziehungsweise angeordnet. Das Absperr- und Entlüftungsventil 112 ist über elektrische Steuerleitungen 101 mit dem elektronischen Steuergerät 22 verbunden. Auch mit dieser Ventilanordnung 14.5 kann der Versorgungsdruckausgang p21 des Anhängersteuerventils 16 abgesperrt und zugleich der Kupplungskopf "Vorrat" 6 des Zugfahrzeugs 2 entlüftet werden.

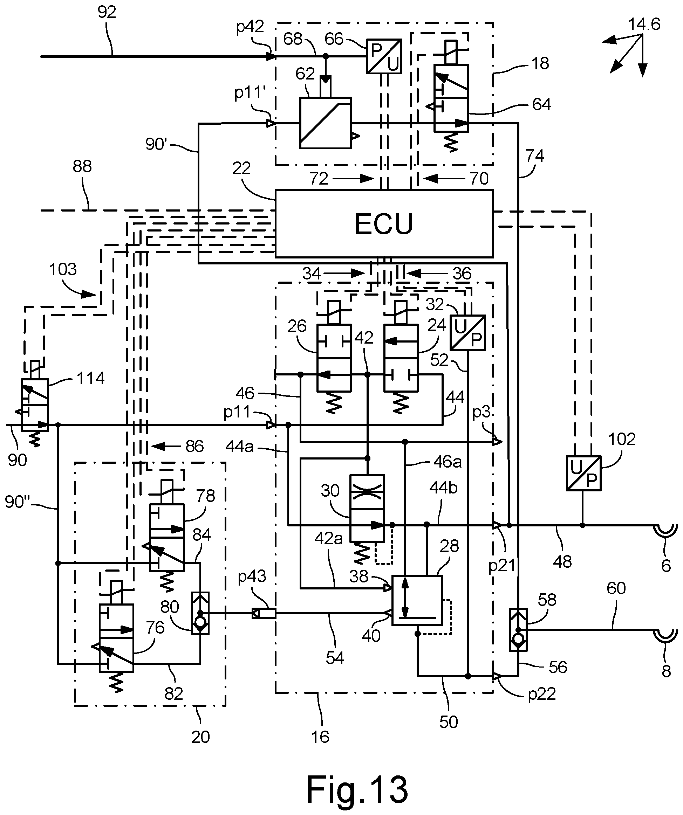

Schließlich zeigt Fig. 13 beispielhaft eine sechste Ausführungsform der erfindungsgemäßen Ventilanordnung 14.6. Diese unterscheidet sich von der zweiten Ausführungsform der Ventilanordnung 14.2 gemäß Fig. 8 bei gleichwirkender Funktionsweise dadurch, dass das elektronisch gesteuerte Absperr- und Entlüftungsventil 114 nun vor dem Versorgungsdruckeingang p11 des Anhängersteuerventils 16 in der externen Versorgungsdruckleitung 90 angeordnet ist. Dabei ist das Absperr- und Entlüftungsventil 114 vor der Abzweigung des zum Parkbremsmodul 20 führenden Leitungsabschnitts 90" für Versorgungsdruckluft angeordnet. Das Absperr- und Entlüftungsventil 114 ist über elektrische Steuerleitungen 103 mit dem elektronischen Steuergerät 22 verbunden. Diese Ventilanordnung 14.6 ermöglicht die vollständige Absperrung der Ventilanordnung 14.6 von einer Zufuhr von Vorratsdruckluft sowie zugleich eine Entlüftung des Kupplungskopfes "Vorrat" 6 des Zugfahrzeugs 2.

### Bezugszeichenliste (Teil der Beschreibung)

- 2: Zugfahrzeug
- 4: Anhängerfahrzeug
- 6: Kupplungskopf "Vorrat" (rot)
- 8: Kupplungskopf "Bremse" (gelb)
- 10: Vorratsdruckleitung
- 12: Bremssteuerleitung
- 14: Ventilanordnung (Stand der Technik)
- 14.1: Ventilanordnung (erste erfindungsgemäße Ausführung)
- 14.2: Ventilanordnung (zweite erfindungsgemäße Ausführung)
- 14.3: Ventilanordnung (dritte erfindungsgemäße Ausführung, erste Variante)
- 14.3': Ventilanordnung (zweite Variante der Ventilanordnung 14.3)
- 14.4: Ventilanordnung (vierte erfindungsgemäße Ausführung)
- 14.5: Ventilanordnung (fünfte erfindungsgemäße Ausführung)
- 14.6: Ventilanordnung (sechste erfindungsgemäße Ausführung)
- 16: Anhängersteuerventil
- 18: Backupventil
- 20: Parkbremsmodul
- 22: Elektronisches Steuergerät (ECU)
- 24: Einlassventil, 2/2-Wege-Magnetventil
- 26: Auslassventil, 2/2-Wege-Magnetventil
- 28: Relaisventil
- 30: Abrissventil
- 32: Anhängersteuerventilseitiger Drucksensor
- 34: Steuerleitungen
- 36: Sensorleitungen
- 38: Direkter Steuereingang
- 40: Invertierter Steuereingang des Relaisventils
- 42: Steuerdruckleitung
- 42a: Leitungszweig
- 44: Interne Vorratsdruckleitung
- 44a: Erster Leitungsabschnitt einer Vorratsdruckleitung innerhalb des Anhängersteuerventils
- 44b: Zweiter Leitungsabschnitt einer Vorratsdruckleitung innerhalb des Anhängersteuerventils
- 46: Entlüftungsleitung
- 46a: Anschlussleitung
- 48: Externe Vorratsdruckleitung (zum Kupplungskopf "Vorrat" führend)
- 50: Ausgangsseitige Bremssteuerleitung
- 52: Sensordruckleitung
- 54: Interne Steuerdruckleitung
- 56: Bremssteuerleitung
- 58: Erstes Wechselventil
- 60: Externe Bremssteuerleitung
- 62: Relaisventil
- 64: Redundanzventil
- 66: Backupventilseitiger Drucksensor, Bremswertsensor
- 68: Interne Steuerdruckleitung des Redundanzventils
- 70: Steuerleitungen
- 72: Sensorleitungen
- 74: Externe Bremssteuerleitung
- 76: Erstes Parkbremsventil
- 78: Zweites Parkbremsventil
- 80: Zweites, parkbremsmodulseitiges Wechselventil
- 82: Erste parkbremsmodulseitige Bremssteuerleitung
- 84: Zweite parkbremsmodulseitige Bremssteuerleitung
- 86: Steuerleitungen
- 88: Datenbus, CAN-Bus
- 90: Externe, eingangsseitige Vorratsdruckleitung
- 90': Anschlussleitung für Vorratsdruckluft
- 90": Leitungsabschnitt der Vorratsdruckleitung 90
- 92: Anschlussleitung an hydraulischen Bremskreis des Zugfahrzeugs 2
- 94: Absperr- und Entlüftungsventil, 3/2-Wege-Schaltventil
- 96: Absperr- und Entlüftungsventil, 3/2-Wege-Schaltventil
- 97: Elektrischer Schalter
- 98: Absperr- und Entlüftungsventil, 3/2-Wege-Magnetschaltventil
- 99: Signalleitung am Schalter 97
- 100: Steuerleitungen
- 101: Steuerleitungen
- 102, 102': Drucksensor
- 103: Steuerleitungen
- 104: Sensorleitungen
- 106: Absperr- und Entlüftungsventil, 3/2-Wege-Magnetschaltventil
- 108: Steuerleitungen
- 110: Absperr- und Entlüftungsventil, 3/2-Wege-Schaltventil
- 112: Absperr- und Entlüftungsventil, 3/2-Wege-Schaltventil in Vorratsdruckleitung 44b
- 114: Absperr- und Entlüftungsventil, 3/2-Wege-Schaltventil in der externen, eingangsseitigen Vorratsdruckleitung 90
- p_{B}: Bremssteuerdruck
- pv: Vorratsdruck
- p3: Entlüftungsausgang
- p11: Vorratsdruckeingang
- p11': Vorratsdruckeingang des Backupventils
- p21: Vorratsdruckausgang
- p22: Bremssteuerausgang
- p42: Bremsdruckeingang, Steuerdruckeingang des Backupventils
- p43: Invertierter Steuerdruckeingang des Anhängersteuerventils
- PB: Parkbremse (Betätigungsstellung)
- V_{A/E}: Absperr- und Entlüftungsventil
- t: Zeit
- t_{K}: Zeitpunkt
- tz: Zeitpunkt
- t1, t2: Zeitpunkte
- t3, t3': Zeitpunkte
- t4, t4': Zeitpunkte
- t5, t5': Zeitpunkte
- Δt_{I}: Impulsdauer
- Δt_{T}: Zeittakt
- Δt_{Z}: Zeitraum

## Patentansprüche

1. Ventilanordnung (14.1, 14.2, 14.3, 14.3',14.4) eines Zugfahrzeugs (2) zur Steuerung einer pneumatischen Bremsanlage eines Anhängerfahrzeugs (4),
wobei die Ventilanordnung ein Anhängersteuerventil (16) mit
einem Vorratsdruckeingang (p11) zur Einleitung von Vorratsdruckluft
sowie einen Vorratsdruckausgang (p21) zur gesteuerten Ausleitung von Vorratsdruckluft aufweist,
wobei der Vorratsdruckausgang (p21) pneumatisch mit einem Kupplungskopf "Vorrat" (6) des Zugfahrzeugs (2) verbunden ist,
und bei dem mittels des Anhängersteuerventils (16) ein Bremssteuerdruck (p_{B}) einstellbar sowie über einen Bremssteuerausgang (p22) des Anhängersteuerventils (16) an einen Kupplungskopf "Bremse" (8) des Zugfahrzeugs (2) leitbar ist,
sowie mit einem elektronisch steuerbaren Parkbremsmodul (20),
mittels dem ein invertierter Steuereingang (p43) des Anhängersteuerventils (16) zur Betätigung der Radbremsen des Anhängerfahrzeugs (4) in einer Parkbremsfunktion entlüftbar ist,
**dadurch gekennzeichnet,**
**dass** in einer Bremssteuerleitung (60) zwischen dem Bremssteuerausgang (p22) und dem Kupplungskopf "Bremse" (8) und/oder in einer Vorratsdruckleitung (48) zwischen dem Vorratsdruckausgang (p21) und dem Kupplungskopf "Vorrat" (6) jeweils ein Absperr- und Entlüftungsventil (94, 96; 98, 106, 110) angeordnet ist,
mittels dem bei aktivierter Parkbremse vor dem Anschließen der Kupplungsköpfe des Anhängerfahrzeugs (4) an die Kupplungsköpfe (6, 8) des Zugfahrzeugs (2) der jeweilige Ausgang (p21, p22) des Anhängersteuerventils (16) absperrbar sowie der zugeordnete Kupplungskopf (6, 8) des Zugfahrzeugs (2) entlüftbar ist,
und mittels dem nach dem Anschließen der Kupplungsköpfe des Anhängerfahrzeugs (4) an die Kupplungsköpfe (6, 8) des Zugfahrzeugs (2) der jeweilige Ausgang (p21, p22) des Anhängersteuerventils (16) wieder pneumatisch mit dem zugeordneten Kupplungskopf (6, 8) des Zugfahrzeugs (2) verbindbar ist.

2. Ventilanordnung nach Anspruch 1, **dadurch gekennzeichnet,**
**dass** sowohl in der Vorratsdruckleitung (48) zwischen dem Vorratsdruckausgang (p21) und dem Kupplungskopf "Vorrat" (6) als auch in der Bremssteuerleitung (60) zwischen dem Bremssteuerausgang (p22) und dem Kupplungskopf "Bremse" (8) jeweils ein manuell betätigbares Absperr- und Entlüftungsventil (94, 96) angeordnet ist,
und **dass** diese Absperr- und Entlüftungsventile (94, 96) als 3/2-Wege-Schaltventile mit einem an den jeweiligen Ausgang (p21, p22) des Anhängersteuerventils (16) angeschlossenen Eingangsanschluss, einem an den jeweiligen Kupplungskopf (6, 8) angeschlossenen Ausgangsanschluss und einem Entlüftungsausgang ausgebildet sind,
bei denen im unbetätigten Zustand der Eingangsanschluss mit dem Ausgangsanschluss verbunden und der Entlüftungsausgang abgesperrt ist,
und bei denen im betätigten Zustand der Eingangsanschluss abgesperrt sowie der Ausgangsanschluss mit dem Entlüftungsausgang verbunden ist.

3. Ventilanordnung nach Anspruch 2, **dadurch gekennzeichnet, dass** die Absperr- und Entlüftungsventile (94, 96) jeweils manuell mittels eines Drucktasters schaltbar und in der betätigten Schaltstellung verrastbar ausgebildet sind.

4. Ventilanordnung nach Anspruch 3, **dadurch gekennzeichnet, dass** die Verrastung der Absperr- und Entlüftungsventile (94, 96) durch eine nochmalige Betätigung des jeweiligen Drucktasters lösbar ausgebildet ist.

5. Ventilanordnung nach Anspruch 3, **dadurch gekennzeichnet, dass** die Verrastung der Absperr- und Entlüftungsventile (94, 96) nach einer vorbestimmten Haltezeit unter der Wirkung jeweils einer ventilinternen Rückstellfeder selbsttätig lösbar ausgebildet ist.

6. Ventilanordnung nach einem der vorherigen Ansprüche, **dadurch gekennzeichnet,**
**dass** sowohl in der Vorratsdruckleitung (48) zwischen dem Vorratsdruckausgang (p21) und dem Kupplungskopf "Vorrat" (6) als auch in der Bremssteuerleitung (60) zwischen dem Bremssteuerausgang (p22) und dem Kupplungskopf "Bremse" (8) jeweils ein elektrisch betätigbares Absperr- und Entlüftungsventil (98, 106) angeordnet ist,
**dass** diese Absperr- und Entlüftungsventile (98, 106) als 3/2-Wege-Magnetschaltventile mit einem an den jeweiligen Ausgang (p21, p22) des Anhängersteuerventils (16) angeschlossenen Eingangsanschluss, einem an den jeweiligen Kupplungskopf (6, 8) angeschlossenen Ausgangsanschluss und einem Entlüftungsausgang ausgebildet sind,
**dass** bei diesen Absperr- und Entlüftungsventilen (98, 106) im unbestromten Zustand der Eingangsanschluss mit dem Ausgangsanschluss verbunden sowie der Entlüftungsausgang abgesperrt ist,
und **dass** bei diesen Absperr- und Entlüftungsventilen (98, 106) im bestromten Zustand der Eingangsanschluss abgesperrt und der Ausgangsanschluss mit dem Entlüftungsausgang verbunden ist.

7. Ventilanordnung nach einem der vorherigen Ansprüche, **dadurch gekennzeichnet,**
**dass** in der Vorratsdruckleitung (48) zwischen dem Vorratsdruckausgang (p21) und dem Kupplungskopf "Vorrat" (6) ein elektrisch betätigbares Absperr- und Entlüftungsventil (98) sowie in der Bremssteuerleitung (60) zwischen dem Bremssteuerausgang (p22) und dem Kupplungskopf "Bremse" (8) ein pneumatisch druckgesteuertes Absperr- und Entlüftungsventil (110) angeordnet ist,
**dass** das elektrisch betätigbare Absperr- und Entlüftungsventil (98) in der Vorratsdruckleitung (48) als ein 3/2-Wege-Magnetschaltventil mit einem an den Vorratsdruckausgang (p21) angeschlossenen Eingangsanschluss, einem an den betreffenden Kupplungskopf (6) angeschlossenen Ausgangsanschluss und einem Entlüftungsausgang ausgebildet ist, dass bei dem elektrisch betätigbaren Absperr- und Entlüftungsventil (98) im unbestromten Zustand der Eingangsanschluss mit dem Ausgangsanschluss verbunden sowie der Entlüftungsausgang abgesperrt ist,
**dass** bei dem elektrisch betätigbaren Absperr- und Entlüftungsventil (98) im bestromten Zustand der Eingangsanschluss abgesperrt und der Ausgangsanschluss mit dem Entlüftungsausgang verbunden ist,
**dass** das pneumatisch druckgesteuerte Absperr- und Entlüftungsventil (110) in der Bremssteuerleitung (60) als ein 3/2-Wege-Schaltventil mit einem an die Vorratsdruckleitung (48) zwischen dem dortigen Absperr- und Entlüftungsventil (98) und dem Kupplungskopf "Vorrat" (6) angeschlossenen Steuereingang,
einem an den Bremssteuerausgang (22) angeschlossenen Eingangsanschluss,
einem an den Kupplungskopf "Bremse" (8) angeschlossenen Ausgangsanschluss und einem Entlüftungsausgang ausgebildet ist,
und **dass** bei diesem pneumatisch druckgesteuerten Absperr- und Entlüftungsventil (110) bei drucklosem Steuereingang der Eingangsanschluss abgesperrt sowie der Ausgangsanschluss mit dem Entlüftungsausgang verbunden ist,
sowie bei druckführendem Steuereingang der Eingangsanschluss mit dem Ausgangsanschluss verbunden sowie der Entlüftungsausgang abgesperrt ist.

8. Ventilanordnung nach Anspruch 6, **dadurch gekennzeichnet, dass** zur Messung des am Kupplungskopf "Bremse" (8) anliegenden Bremssteuerdruckes (p_{B}) ein pneumatischer Drucksensor (102') zwischen dem Absperr- und Entlüftungsventil (106) sowie dem Kupplungskopf "Bremse" (8) an die Bremssteuerleitung (60) angeschlossen ist.

9. Ventilanordnung nach einem der Ansprüche 6 bis 8, **dadurch gekennzeichnet,**
**dass** zur Messung des am Kupplungskopf "Vorrat" (6) anliegenden Vorratsdruckes (p_{V}) ein pneumatischer Drucksensor (102) zwischen dem Absperr- und Entlüftungsventil (98) und dem Kupplungskopf "Vorrat" (6) an die Vorratsdruckleitung (48) angeschlossen ist.

10. Ventilanordnung nach einem der vorherigen Ansprüche, **dadurch gekennzeichnet,**
**dass** an dem Zugfahrzeug (2) ein manuell betätigbarer elektrischer Schalter (97) angeordnet ist,
**dass** dieser Schalter (97) mit dem elektronischen Steuergerät (22) über eine Signalleitung (99) verbunden ist,
und **dass** dieser Schalter (97) sowie das elektronische Steuergerät (22) derartig ausgebildet sind,
**dass** eine Betätigung dieses Schalters (97) eine Bestromung zumindest eines der beiden Absperr- und Entlüftungsventile (98, 106, 110, 112, 114) und damit eine Entlüftung des jeweils zugeordneten Kupplungskopfes (6, 8) auslöst.

11. Verfahren zur Steuerung einer Ventilanordnung (14.1, 14.2, 14.3, 14.3', 14.4, 14.5, 14.6) nach einem der vorherigen Ansprüche,
**dadurch gekennzeichnet,**
**dass** beim Einlegen der Parkbremse des Zugfahrzeugs (2) entsprechend einem Betätigungszustand PB = 1 der Kupplungskopf "Vorrat" (6) des Zugfahrzeugs (2) entlüftet wird und der Kupplungskopf "Bremse" (8) des Zugfahrzeugs (2) entlüftet gehalten wird.

12. Verfahren nach Anspruch 11, **dadurch gekennzeichnet,**
**dass** der Kupplungskopf "Vorrat" (6) und der Kupplungskopf "Bremse" (8) des Zugfahrzeugs (2) solange entlüftet gehalten werden, bis die Parkbremse des Zugfahrzeugs (2) wieder gelöst wird (Betätigungszustand PB = 0).

13. Verfahren nach Anspruch 11, **dadurch gekennzeichnet,**
**dass** der Kupplungskopf "Vorrat" (6) und der Kupplungskopf "Bremse" (8) des Zugfahrzeugs (2) über einen vorbestimmten Zeitraum (Δt_{Z}) entlüftet gehalten werden,
welcher derart bemessen ist, dass ein Fahrer innerhalb dieses Zeitraums bequem in der Lage ist, das Fahrerhaus des Zugfahrzeugs (2) zu verlassen, den Kupplungsbereich aufzusuchen und die Kupplungsköpfe des Anhängerfahrzeugs (6) an die Kupplungsköpfe (6, 8) des Zugfahrzeugs (2) anzuschließen.

14. Verfahren nach Anspruch 11, **dadurch gekennzeichnet,**
**dass** während der Entlüftung von Kupplungskopf "Vorrat" (6) und Kupplungskopf "Bremse" (8) des Zugfahrzeugs (2) in einem vorgegebenen Zeittakt (Δt_{T}) Druckimpulse in die zu dem Kupplungskopf "Vorrat" (6) führende Vorratsdruckleitung (48) eingesteuert werden,
**dass** der Druckgradient in der Vorratsdruckleitung (48) sensorisch gemessen wird,
**dass** die beiden Kupplungsköpfe (6, 8) des Zugfahrzeugs (2) entlüftet gehalten werden, sofern ein hoher Druckgradient vorliegt,
und **dass** die Entlüftung der beiden Kupplungsköpfe (6, 8) des Zugfahrzeugs (2) beendet wird, sofern ein niedriger Druckgradient vorliegt.

15. Verfahren nach Anspruch 11, **dadurch gekennzeichnet,**
**dass** während der Entlüftung von Kupplungskopf "Vorrat" (6) und Kupplungskopf "Bremse" (8) des Zugfahrzeugs (2) in einem vorgegebenen Zeittakt (Δt_{T}) Druckimpulse in die zu dem Kupplungskopf "Bremse" (8) des Zugfahrzeugs (2) führende Bremssteuerleitung (60) eingesteuert werden,
**dass** der Druckgradient in der Bremssteuerleitung (60) sensorisch gemessen wird,
und **dass** die beiden Kupplungsköpfe (6, 8) des Zugfahrzeugs (2) entlüftet gehalten werden, sofern ein hoher Druckgradient vorliegt,
und **dass** die Entlüftung der beiden Kupplungsköpfe (6, 8) des Zugfahrzeugs (2) beendet wird, sofern ein niedriger Druckgradient vorliegt.

16. Verfahren einem der Ansprüche **11** bis 15, **dadurch gekennzeichnet,**
**dass** zur Vermeidung eines Lösens der Radbremsen des Zugfahrzeugs (2) zuerst der Kupplungskopf "Vorrat" (6) des Zugfahrzeugs (2) entlüftet wird und der Kupplungskopf "Bremse" (8) des Zugfahrzeugs (2) geringfügig zeitversetzt dazu entlüftet wird beziehungsweise entlüftet gehalten wird.

17. Verfahren nach einem der Anspruch 11 bis 16, **dadurch gekennzeichnet,**
**dass** die Messung des Druckgradienten mittels eines pneumatischen Drucksensors (102, 102') gemäß den Ansprüchen 13 und 14 oder mittels eines innerhalb des Anhängersteuerventils (16) an die zu dem Bremssteuerausgang (p22) führenden Bremssteuerleitung (50) angeschlossenen pneumatischen Drucksensor (32) erfolgt.

## Claims

1. Valve arrangement (14.1, 14.2, 14.3, 14.3', 14.4) of a tractor vehicle (2) for controlling a pneumatic brake system of a trailer vehicle (4),
wherein the valve arrangement has a trailer control valve (16) with
a reservoir pressure input (p11) for the introduction of reservoir compressed air
and a reservoir pressure output (p21) for the controlled discharge of reservoir compressed air,
wherein the reservoir pressure output (p21) is pneumatically connected to a "reservoir" coupling head (6) of the tractor vehicle (2),
and in which, by means of the trailer control valve (16), a brake control pressure (p_{B}) can be set and can be conducted via a brake control output (p22) of the trailer control valve (16) to a "brake" coupling head (8) of the tractor vehicle (2),
and with an electronically controllable parking brake module (20),
by means of which an inverted control input (p43) of the trailer control valve (16) can be ventilated for the actuation of the wheel brakes of the trailer vehicle (4) in a parking brake function,
**characterized**
**in that**, in a brake control line (60) between the brake control output (p22) and the "brake" coupling head (8) and/or in a reservoir pressure line (48) between the reservoir pressure output (p21) and the "reservoir" coupling head (6), there is arranged in each case one shut-off and ventilation valve (94, 96; 98, 106, 110),
by means of which, when the parking brake is activated, before the connection of the coupling heads of the trailer vehicle (4) to the coupling heads (6, 8) of the tractor vehicle (2), the respective output (p21, p22) of the trailer control valve (16) can be shut off and the associated coupling head (6, 8) of the tractor vehicle (2) can be ventilated,
and by means of which, after the connection of the coupling heads of the trailer vehicle (4) to the coupling heads (6, 8) of the tractor vehicle (2), the respective output (p21, p22) of the trailer control valve (16) is pneumatically connectible again to the associated coupling head (6, 8) of the tractor vehicle (2).

2. Valve arrangement according to Claim 1,
**characterized**
**in that**, both in the reservoir pressure line (48) between the reservoir pressure output (p21) and the "reservoir" coupling head (6) and in the brake control line (60) between the brake control output (p22) and the "brake" coupling head (8), there is arranged in each case one manually actuable shut-off and ventilation valve (94, 96),
and **in that** these shut-off and ventilation valves (94, 96) are formed as 3/2-way switching valves with an input connection connected to the respective output (p21, p22) of the trailer control valve (16), an output connection connected to the respective coupling head (6, 8), and a ventilation output,
in the case of which, in the non-actuated state, the input connection is connected to the output connection and the ventilation output is shut off,
and in the case of which, in the actuated state, the input connection is shut off and the output connection is connected to the ventilation output.

3. Valve arrangement according to Claim 2, **characterized in that** the shut-off and ventilation valves (94, 96) are each configured to be manually switchable, and lockable in the actuated switching position, by means of a pushbutton.

4. Valve arrangement according to Claim 3, **characterized in that** the locking of the shut-off and ventilation valves (94, 96) is configured to be releasable by means of a further actuation of the respective pushbutton.

5. Valve arrangement according to Claim 3, **characterized in that** the locking of the shut-off and ventilation valves (94, 96) is configured to be releasable automatically after a predetermined holding time under the action of a respective valve-internal resetting spring.

6. Valve arrangement according to one of the preceding claims, **characterized**
**in that**, both in the reservoir pressure line (48) between the reservoir pressure output (p21) and the "reservoir" coupling head (6) and in the brake control line (60) between the brake control output (p22) and the "brake" coupling head (8), there is arranged in each case one electrically actuable shut-off and ventilation valve (98, 106),
**in that** these shut-off and ventilation valves (98, 106) are formed as 3/2-way solenoid switching valves with an input connection connected to the respective output (p21, p22) of the trailer control valve (16), an output connection connected to the respective coupling head (6, 8), and a ventilation output,
**in that**, in the case of these shut-off and ventilation valves (98, 106), in the electrically deenergized state, the input connection is connected to the output connection and the ventilation output is shut off,
and **in that**, in the case of these shut-off and ventilation valves (98, 106), in the electrically energized state, the input connection is shut off and the output connection is connected to the ventilation output.

7. Valve arrangement according to one of the preceding claims, **characterized**
**in that**, in the reservoir pressure line (48) between the reservoir pressure output (p21) and the "reservoir" coupling head (6), there is arranged an electrically actuable shut-off and ventilation valve (98), and in the brake control line (60) between the brake control output (p22) and the "brake" coupling head (8), there is arranged a pneumatically pressure-controlled shut-off and ventilation valve (110),
**in that** the electrically actuable shut-off and ventilation valve (98) in the reservoir pressure line (48) is formed as a 3/2-way solenoid switching valve with an input connection connected to the reservoir pressure output (p21), an output connection connected to the respective coupling head (6), and a ventilation output, in that, in the case of the electrically actuable shut-off and ventilation valve (98), in the electrically deenergized state, the input connection is connected to the output connection and the ventilation output is shut off,
**in that**, in the case of the electrically actuable shut-off and ventilation valve (98), in the electrically energized state, the input connection is shut off and the output connection is connected to the ventilation output, in that the pneumatically pressure-controlled shut-off and ventilation valve (110) in the brake control line (60) is formed as a 3/2-way switching valve with a control input connected to the reservoir pressure line (48) between the shut-off and ventilation valve (98) located there and the "reservoir" coupling head (6),
an input connection connected to the brake control output (22),
an output connection connected to the "brake" coupling head (8), and a ventilation output,
and **in that**, in the case of this pneumatically pressure-controlled shut-off and ventilation valve (110), when the control input is unpressurized, the input connection is shut off and the output connection is connected to the ventilation output,
and, when the control input is pressurized, the input connection is connected to the output connection and the ventilation output is shut off.

8. Valve arrangement according to Claim 6, **characterized in that**, for the measurement of the brake control pressure (p_{B}) prevailing at the "brake" coupling head (8), a pneumatic pressure sensor (102') is connected to the brake control line (60) between the shut-off and ventilation valve (106) and the "brake" coupling head (8).

9. Valve arrangement according to one of Claims 6 to 8, **characterized**
**in that**, for the measurement of the reservoir pressure (p_{V}) prevailing at the "reservoir" coupling head (6), a pneumatic pressure sensor (102) is connected to the reservoir pressure line (48) between the shut-off and ventilation valve (98) and the "reservoir" coupling head (6).

10. Valve arrangement according to one of the preceding claims, **characterized**
**in that** a manually actuable electrical switch (97) is arranged on the tractor vehicle (2),
**in that** this switch (97) is connected to the electronic control unit (22) via a signal line (99),
and **in that** this switch (97) and the electronic control unit (22) are configured
such that an actuation of this switch (97) triggers an electrical energization of at least one of the two shut-off and ventilation valves (98, 106, 110, 112, 114) and thus a ventilation of the respectively associated coupling head (6, 8).

11. Method for controlling a valve arrangement (14.1, 14.2, 14.3, 14.3', 14.4, 14.5, 14.6) according to one of the preceding claims,
**characterized**
**in that**, during the engagement of the parking brake of the tractor vehicle (2) corresponding to an actuation state PB = 1, the "reservoir" coupling head (6) of the tractor vehicle (2) is ventilated and the "brake" coupling head (8) of the tractor vehicle (2) is kept in a ventilated state.

12. Method according to Claim 11, **characterized**
**in that** the "reservoir" coupling head (6) and the "brake" coupling head (8) of the tractor vehicle (2) are kept in a ventilated state until such time as the parking brake of the tractor vehicle (2) is released again (actuation state PB = 0).

13. Method according to Claim 11, **characterized**
**in that** the "reservoir" coupling head (6) and the "brake" coupling head (8) of the tractor vehicle (2) are kept in a ventilated state over a predetermined time period (Δt_{Z}) which is dimensioned such that, within this time period, a driver is comfortably capable of exiting the driver's cab of the tractor vehicle (2), seeking out the coupling region and connecting the coupling heads of the trailer vehicle (6) to the coupling heads (6, 8) of the tractor vehicle (2).

14. Method according to Claim 11, **characterized**
**in that**, during the ventilation of the "reservoir" coupling head (6) and the "brake" coupling head (8) of the tractor vehicle (2), pressure pulses are introduced in a specified timing cycle (Δt_{T}) into the reservoir pressure line (48) leading to the "reservoir" coupling head (6),
**in that** the pressure gradient in the reservoir pressure line (48) is measured by sensor means,
**in that** the two coupling heads (6, 8) of the tractor vehicle (2) are kept in a ventilated state if a steep pressure gradient is present,
and **in that** the ventilation of the two coupling heads (6, 8) of the tractor vehicle (2) is ended if a shallow pressure gradient is present.

15. Method according to Claim 11, **characterized**
**in that**, during the ventilation of the "reservoir" coupling head (6) and the "brake" coupling head (8) of the tractor vehicle (2), pressure pulses are introduced in a specified timing cycle (Δt_{T}) into the brake control line (60) leading to the "brake" coupling head (8) of the tractor vehicle (2),
**in that** the pressure gradient in the brake control line (60) is measured by sensor means,
and **in that** the two coupling heads (6, 8) of the tractor vehicle (2) are kept in a ventilated state if a steep pressure gradient is present,
and **in that** the ventilation of the two coupling heads (6, 8) of the tractor vehicle (2) is ended if a shallow pressure gradient is present.

16. Method one of Claims 11 to 15, **characterized**
**in that**, in order to avoid a release of the wheel brakes of the tractor vehicle (2), firstly the "reservoir" coupling head (6) of the tractor vehicle (2) is ventilated, and the "brake" coupling head (8) of the tractor vehicle (2) is ventilated after a slight time delay in relation thereto, or is kept in a ventilated state.

17. Method according to one of Claims 11 to 16,
**characterized**
**in that** the measurement of the pressure gradient is performed by means of a pneumatic pressure sensor (102, 102') according to Claims 13 and 14 or by means of a pneumatic pressure sensor (32) which is connected, within the trailer control valve (16), to the brake control line (50) leading to the brake control output (p22).

## Revendications

1. Agencement de soupapes (14.1, 14.2, 14.3, 14.3', 14.4) d'un véhicule tracteur (2) permettant de commander un système de freinage pneumatique d'un véhicule remorque (4),
dans lequel l'agencement de soupapes présente une soupape de commande de remorque (16) comprenant
une entrée de pression de réserve (p11) pour introduire de l'air comprimé de réserve
ainsi qu'une sortie de pression de réserve (p21) pour l'évacuation commandée de l'air comprimé de réserve, dans lequel la sortie de pression de réserve (p21) est reliée pneumatiquement à une tête d'attelage « réserve » (6) du véhicule tracteur (2),
et dans lequel la soupape de commande de remorque (16) permet de régler une pression de commande de frein (p_{B}) et de l'acheminer par une sortie de pression de commande de frein (p22) de la soupape de commande de remorque (16) à une tête d'attelage « frein » (8) du véhicule tracteur (2),
et un module de frein de stationnement (20) à commande électronique,
au moyen duquel une entrée de commande inversée (p43) de la soupape de commande de remorque (16) peut être purgée pour actionner les freins de roue du véhicule remorque (4) dans une fonction de frein de stationnement, **caractérisé**
**en ce que** dans une ligne de commande de frein (60) entre la sortie de commande de frein (p22) et la tête d'attelage « frein » (8) et/ou dans une ligne de pression de réserve (48), entre la sortie de pression de réserve (p21) et la tête d'attelage « réserve » (6), respectivement une soupape d'arrêt et de purge (94, 96 ; 98, 106, 110) est disposée,
au moyen de laquelle, lorsque le frein de stationnement est activé avant le raccordement des têtes d'attelage du véhicule remorque (4) aux têtes d'attelage (6, 8) du véhicule tracteur (2), la sortie respective (p21, p22) de la soupape de commande de remorque (16) peut être fermée et la tête d'attelage (6, 8) associée du véhicule tracteur (2) peut être purgée,
et au moyen de laquelle, après le raccordement des têtes d'attelage du véhicule tracteur (4) aux têtes d'attelage (6, 8) du véhicule tracteur (2), la sortie respective (p21, p22) de la soupape de commande de remorque (16) peut à nouveau être reliée pneumatiquement à la tête d'attelage (6, 8) associée du véhicule tracteur (2).

2. Agencement de soupapes selon la revendication 1, **caractérisé**
**en ce que** respectivement une soupape d'arrêt et de purge (94, 96) est disposée aussi bien dans la ligne de pression de réserve (48) entre la sortie de pression de réserve (p21) et la tête d'attelage « réserve » (6) que dans la ligne de commande de frein (60) entre la sortie de commande de frein (p22) et la tête d'attelage « frein » (8),
et **en ce que** ces soupapes d'arrêt et de purge (94, 96) sont réalisées sous la forme de soupapes de commutation 3/2 voies pourvues d'un raccord d'entrée raccordé à la sortie (p21, p22) respective de la soupape de commande de remorque (16), d'un raccord de sortie raccordée à la tête d'attelage (6, 8) respective et d'une sortie de purge,
dans lesquelles, à l'état non actionné, le raccord d'entrée est relié au raccord de sortie, et la sortie de purge est fermée,
et dans lesquelles, à l'état actionné, le raccord d'entrée est fermé, et le raccord de sortie est relié à la sortie de purge.

3. Agencement de soupapes selon la revendication **2, caractérisé en ce que** les soupapes d'arrêt et de purge (94, 96) sont respectivement réalisées de manière à pouvoir être commutées manuellement au moyen d'un bouton poussoir et enclenchées dans la position de commutation actionnée.

4. Agencement de soupapes selon la revendication 3, **caractérisé en ce que** l'enclenchement des soupapes d'arrêt et de purge (94, 96) est réalisé de manière à pouvoir être débloqué par un nouvel actionnement du bouton poussoir respectif.

5. Agencement de soupapes selon la revendication 3, **caractérisé en ce que** l'enclenchement des soupapes d'arrêt et de purge (94, 96) est réalisé de manière à pouvoir être débloqué automatiquement après un délai de maintien prédéterminé sous l'effet d'un ressort de rappel interne à la soupape.

6. Agencement de soupapes selon l'une quelconque des revendications précédentes, **caractérisé**
**en ce que** respectivement une soupape d'arrêt et de purge (98, 106) à actionnement électrique est disposée aussi bien dans la ligne de pression de réserve (48) entre la sortie de pression de réserve (p21) et la tête d'attelage « réserve » (6) que dans la ligne de commande de frein (60) entre la sortie de commande de frein (p22) et la tête d'attelage « frein » (8),
**en ce que** ces soupapes d'arrêt et de purge (98, 106) sont réalisées sous la forme de soupapes de commutation magnétiques 3/2 voies pourvues d'un raccord d'entrée raccordé à la sortie (p21, p22) respective de la soupape de commande de remorque (16), d'un raccord de sortie raccordé à la tête d'attelage (6, 8) respective et d'une sortie de purge,
**en ce que** sur ces soupapes d'arrêt et de purge (98, 106), à l'état hors tension, le raccord d'entrée est relié au raccord de sortie, et la sortie de purge est fermée,
et **en ce que** sur ces soupapes d'arrêt et de purge (98, 106), à l'état sous tension, le raccord d'entrée est fermé, et le raccord de sortie est relié à la sortie de purge.

7. Agencement de soupapes selon l'une quelconque des revendications précédentes, **caractérisé**
**en ce qu'**une soupape d'arrêt et de purge (98) à actionnement électrique est disposée dans la ligne de pression de réserve (48) entre la sortie de pression de réserve (p21) et la tête d'attelage « réserve » (6), et une soupape d'arrêt et de purge (110) commandée par pression pneumatique est disposée dans la ligne de commande de frein (60) entre la sortie de commande de frein (p22) et la tête d'attelage « frein » (8),
**en ce que** la soupape d'arrêt et de purge (98) à actionnement électrique dans la ligne de pression de réserve (48) est réalisée sous la forme d'une soupape de commutation magnétique 3/2 voies, pourvue d'un raccord d'entrée raccordé à la sortie de pression de réserve (p21), d'un raccord de sortie raccordé à la tête d'attelage (6) concernée et d'une sortie de purge,
**en ce que** pour la soupape d'arrêt et de purge (98) à actionnement électrique, à l'état hors tension, le raccord d'entrée est relié au raccord de sortie, et la sortie de purge est fermée,
**en ce que** pour cette soupape d'arrêt et de purge (98) à actionnement électrique, à l'état sous tension, le raccord d'entrée est fermé, et la sortie de purge est reliée à la sortie de purge,
**en ce que** la soupape d'arrêt et de purge (110) commandée par pression pneumatique dans la ligne de commande de frein (60) est réalisée sous la forme d'une soupape de commutation 3/2 voies, pourvue d'une d'entrée de commande raccordée à la ligne de pression de réserve (48) entre la soupape d'arrêt et de purge (98) à cet endroit et la tête d'attelage « réserve » (6),
d'un raccord d'entrée raccordé à la sortie de commande de frein (22),
d'un raccord de sortie raccordé à la tête d'attelage « frein » (8) et d'une sortie de purge,
et **en ce que** pour cette soupape d'arrêt et de purge (110) commandée par pression pneumatique, lorsque l'entrée de commande est sans pression, le raccord d'entrée est fermé, et le raccord de sortie est relié à la sortie de purge,
et lorsque l'entrée de commande est sous pression, le raccord d'entrée est relié au raccord de sortie, et la sortie de purge est fermée.

8. Agencement de soupapes selon la revendication 6, **caractérisé en ce que** pour la mesure de la pression de commande de frein (p_{B}) appliquée à la tête d'attelage « frein » (8), un capteur de pression pneumatique (102') est raccordé à la ligne de commande de frein (60) entre la soupape d'arrêt et de purge (106) et la tête d'attelage « frein » (8).

9. Agencement de soupapes selon l'une quelconque des revendications 6 à 8, **caractérisé**
**en ce que** pour la mesure de la pression de réserve (p_{V}) appliquée à la tête d'attelage « réserve » (6), un capteur de pression pneumatique (102) est raccordé à la ligne de pression de réserve (48) entre la soupape d'arrêt et de purge (98) et la tête d'attelage « réserve » (6).

10. Agencement de soupapes selon l'une quelconque des revendications précédentes, **caractérisé**
**en ce qu'**un commutateur électrique (97) à actionnement manuel est disposé sur le véhicule tracteur (2),
**en ce que** ce commutateur (97) est relié à l'appareil de commande électronique (22) par l'intermédiaire d'une ligne de signal (99),
**en ce que** ce commutateur (97) et l'appareil de commande électronique (22) sont réalisés de telle sorte
qu'un actionnement de ce commutateur (97) déclenche une mise sous tension d'au moins l'une des deux soupapes d'arrêt et de purge (98, 106, 110, 112, 114) et donc une purge de la tête d'attelage (6, 8) respectivement associée.

11. Procédé permettant de commander un agencement de soupapes (14.1, 14.2, 14.3, 14.3', 14.4, 14.5, 14.6) selon l'une quelconque des revendications précédentes,
**caractérisé**
**en ce qu'**à l'engagement du frein de stationnement du véhicule tracteur (2), selon un état d'actionnement PB = 1, la tête d'attelage « réserve » (6) du véhicule tracteur (2) est purgée et la tête d'attelage « frein » (8) du véhicule tracteur (2) est maintenue en purge.

12. Procédé selon la revendication 11, **caractérisé**
**en ce que** la tête d'attelage « réserve » (6) et la tête d'attelage « frein » (8) du véhicule tracteur (2) sont maintenues en purge jusqu'à ce que le frein de stationnement du véhicule tracteur (2) soit à nouveau desserré (état d'actionnement PB = 0).

13. Procédé selon la revendication 11, **caractérisé**
**en ce que** la tête d'attelage « réserve » (6) et la tête d'attelage « frein » (8) du véhicule tracteur (2) sont maintenues en purge pendant une période prédéterminée (Δt_{Z}),
qui est dimensionnée de telle sorte qu'un conducteur peut pendant cette période facilement quitter la cabine du véhicule tracteur (2), se rendre à la zone d'attelage et raccorder les têtes d'attelage du véhicule remorque (6) aux têtes d'attelage (6, 8) du véhicule tracteur (2).

14. Procédé selon la revendication 11, **caractérisé**
**en ce que** pendant la purge de la tête d'attelage « réserve » (6) et de la tête d'attelage « frein » (8) du véhicule tracteur (2), des impulsions de pression sont injectées dans un rythme prédéfini (Δt_{T}) dans la ligne de pression de réserve (48) menant à la tête d'attelage « réserve » (6),
**en ce que** le gradient de pression dans la ligne de pression de réserve (48) est mesuré par capteur,
**en ce que** les deux têtes d'attelage (6, 8) du véhicule tracteur (2) sont maintenues en purge dans la mesure où un gradient de pression élevé est présent,
et **en ce que** la purge des deux têtes d'attelage (6, 8) du véhicule tracteur (2) est terminée dans la mesure où un gradient de pression bas est présent.

15. Procédé selon la revendication 11, **caractérisé**
**en ce que** pendant la purge de la tête d'attelage « réserve » (6) et de la tête d'attelage « frein » (8) du véhicule tracteur (2), des impulsions de pression sont injectées dans un rythme prédéfini (Δt_{T}) dans la ligne de commande de frein (60) menant à la tête d'attelage « frein » (8) du véhicule tracteur (2),
**en ce que** le gradient de pression dans la ligne de commande de frein (60) est mesuré par capteur,
**en ce que** les deux têtes d'attelage (6, 8) du véhicule tracteur (2) sont maintenues en purge dans la mesure où un gradient de pression élevé est présent,
et **en ce que** la purge des deux têtes d'attelage (6, 8) du véhicule tracteur (2) est terminée dans la mesure où un gradient de pression bas est présent.

16. Procédé l'une quelconque des revendications 11 à 15,
**caractérisé**
**en ce que** pour éviter un déblocage des freins de roue du véhicule tracteur (2), d'abord la tête d'attelage « réserve » (6) du véhicule tracteur (2) est purgée, et la tête d'attelage « frein » (8) du véhicule tracteur (2) est purgée ou maintenue en purge de manière légèrement différée par rapport à celle-ci.

17. Procédé selon l'une quelconque des revendications 11 à 16, **caractérisé**
**en ce que** la mesure du gradient de pression est effectuée au moyen d'un capteur de pression pneumatique (102, 102') selon l'une quelconque des revendications 13 et 14 ou au moyen d'un capteur de pression pneumatique (32) raccordé à l'intérieur de la soupape de commande de remorque (16) à la ligne de commande de frein (50) menant à la sortie de commande de frein (p22).
